# EUROPÄISCHE PATENTSCHRIFT

(11) **EP 2 886 583 B1**
(45) Veröffentlichungstag und Bekanntmachung des Hinweises auf die Patenterteilung: **17.10.2018**
(21) Anmeldenummer: 14196127.6
(22) Anmeldetag: 03.12.2014
(51) Int. Cl.: C08G 73/10

(54) **Polyimidpulver mit hoher thermooxidativer Beständigkeit**
Polyimide powder having high thermooxidative stability
Poudre de polyimide à résistance thermooxydative élevée

(30) Priorität: 17.12.2013 EP 13197869
(43) Veröffentlichungstag der Anmeldung: 24.06.2015
(73) Patentinhaber: Evonik Fibres GmbH, 4861 Schörfling am Attersee (AT)
(72) Erfinder: Ungerank, Markus, 4320 Perg (AT); Maurer, Christian, 4840 Vöcklabruck (AT); Danzer, Dieter, 4663 Laakirchen (AT); Roegl, Harald, 4702 Wallern an der Trattnach (AT); Eder, Jürgen, 4880 St. Georgen im Attergau (AT)
(74) Vertreter: Thiele, Georg Friedrich

(56) Entgegenhaltungen:
- EP-A1- 1 236 756
- WO-A1-2007/009652
- US-A- 4 874 835
- US-A1- 2009 093 608

## Beschreibung

Die Erfindung betrifft Formkörper mit hoher thermooxidativer Beständigkeit, welche mittels Direct Forming- und Hot Compression Molding Verfahren hergestellt werden können, sowie ein neues Polyimidpulver zu deren Herstellung und ein Verfahren zur Herstellung dieses Polyimidpulvers.

Hochtemperaturpolyimide (Erweichungspunkt > 300°C) sind als Pulver bzw. Formteile im Handel erhältlich. Die Produkte Vespel® von DuPont, Meldin® 7000 von Saint Gobain, Plavis® von Daelim und Upimol® von UBE sind nur als Formteile am Markt erhältlich, während die Produkte P84® NT1 und P84® NT2 von Evonik Fibres auch als Pulver verkauft werden. Aus diesem Pulver stellt die Firma Ensinger Sintimid Formteile mit dem Markennamen TECASINT® her. Die ersten drei Produkte sind chemisch ident, sie werden aus Pyromellitsäure-dianhydrid und 4,4'-Diaminodiphenylether hergestellt. Upimol® wird hergestellt aus Biphenyltetracarbonsäure-dianhydrid und Diaminodiphenylether bzw. Phenylendiamin. Bei P84®NT1 und P84®NT2 handelt es sich um Blockcopolymere gemäß WO 2007009652.

In US 5886129 wird gelehrt, dass Polyimide hergestellt aus BPDA (3,3',4,4'-Biphenyltetracarbonsäuredianhydrid) und Phenylendiamin gute thermooxidative Stabilitäten aufweisen, wenn das Verhältnis von p-Phenylendiamin (p-PDA) zu m-Phenylendiamin (m-PDA) größer als 60 zu 40 ist. Vergleichsbeispiele von Polyimiden hergestellt mit anderen Monomeren (3,3',4,4'-Biphenyltetracarbonsäuredianhydrid mit ODA(4,4'-Diaminodiphenylether) oder PMDA (Pyromellitsäuredianhydrid) mit ODA) zeigen vergleichsweise geringere thermooxidative Beständigkeiten.

Alle vorgenannten Produkte weisen Eigenschaften auf, die noch verbesserungsfähig sind. So ist die thermooxidative Beständigkeit von P84®NT1 und NT2 verbesserungsfähig. Ferner ist die Herstellung eines Blockcopolymers aufwendiger als die eines statistischen Copolymers.

Vespel® und seine Derivate und Upimol® weisen folgende Nachteile auf:
- das Pulver ist am freien Markt nicht erhältlich,
- das Halbzeug kann nur nach dem heiß-isostatischen Pressverfahren hergestellt werden, die Herstellung ist daher aufwändig und teuer,
- es wird vermutet, dass der Herstellungsprozess ein aufwändiger mehrstufiger Prozess ist.

In der EP 1 236 756 A1 werden Polyimide offenbart, die eine gute thermische Beständigkeit aufweisen sollen und die dort als Laminat aus Polyimid plus Metall, in elektrischen Schaltkreisen eingesetzt werden. Wie in den Vergleichs-beispielen der vorliegenden Erfindung gezeigt, weisen die Polyimide der EP 1 236 756 A1 jedoch ebenfalls eine unzureichende thermooxidative Beständigkeit für die Anwendungsgebiete, die Gegenstand der vorliegenden Erfindung sind, auf.

Es besteht somit nach wie vor Bedarf an neuen Formkörpern mit sehr guter thermooxidativer Beständigkeit, welche sowohl mittels Direct Forming als auch mittels Hot Compression Molding Verfahren hergestellt werden können.

Aufgabe der vorliegenden Erfindung war es daher neue Formkörper und Polymerpulver zu deren Herstellung bereitzustellen, welche die Nachteile der Formkörper und Polymerpulver des Standes der Technik nicht oder nur in verringertem Maße aufweisen. Ferner sollen Verfahren zu deren Herstellung bereitgestellt werden.

Eine spezielle Aufgabe kann darin gesehen werden, ein Polymerpulver bereitzustellen, dass besonders gut zur Herstellung von Formteilen im Direct Forming und/oder im Compression Molding Verfahren geeignet ist.

In einer weiteren speziellen Aufgabe sollen der Formkörper und das Polymerpulver eine hohe thermooxidative Beständigkeit, d.h. einen möglichst geringen Masseverlust bei Temperaturen von größer gleich 400 °C im Luftstrom, aufweisen.

Ebenfalls als besondere Aufgabe kann angesehen werden Formkörper bereitzustellen, welche mechanisch besser bearbeitbar sind als TECASINT® 1000.

Eine weitere spezielle Aufgabe bestand darin, dass sich die aus dem erfindungsgemäßen Verfahren hergestellten Formteile ohne Gasblasen und Einschlüsse sintern lassen, Oberflächen mit einer hohen Qualität aufweisen und ihre Kanten kleine Krümmungsradien aufweisen können ohne dass es zu Ausbrüchen kommt.

Die erfindungsgemäßen Formkörper und Polymerpulver sollten einfach und kostengünstig hergestellt werden können.

Weitere nicht explizit genannte Aufgaben ergeben sich aus dem Gesamtzusammenhang der nachfolgenden Beschreibung, Beispiele und Ansprüche.

Die Aufgaben werden durch die erfindungsgemäßen Formkörper nach einem der Ansprüche 1 oder 2, ein Verfahren zu deren Herstellung nach Anspruch 3, das erfindungsgemäße Polyimidpulver gemäß Anspruch 4 und ein Verfahren zu dessen Herstellung gemäß Anspruch 9 gelöst. Bevorzugte Ausgestaltungsformen der vorliegenden Erfindung werden in den abhängigen Ansprüchen sowie in der Beschreibung und den Beispielen offenbart.

Die Erfinder haben überraschend herausgefunden, dass Formkörper, hergestellt aus einem Rohpulver umfassend ein erfindungsgemäßes Polyimidpulver, sowie das erfindungs-gemäße Polyimidpulver selbst, eine hervorragende thermooxidative Beständigkeit aufweisen. Das bedeutet, dass sie selbst nach länger andauernder Überströmung mit Luft bei Temperaturen oberhalb von 400 °C nur einen sehr geringen Gewichtsverlust aufweisen. Wie in den Beispielen und den Vergleichsbeispielen gezeigt, zeigen die erfindungsgemäßen Pulver hier deutliche Vorteile gegenüber P84® NT1 und NT2. Die höhere thermooxidative Beständigkeit führt zu Vorteilen in der Anwendung der erfindungsgemäßen Formkörper bei höheren Temperaturen (> 300°C), da die Beständigkeit gegenüber Sauerstoff verbessert ist und somit die Lebensdauer bei gegebener Temperatur verlängert wird oder höhere Einsatztemperaturen zulässig sind.

Im Vergleich zur US 5886129 sind in den erfindungsgemäßen Polyimidpolymeren 1 bis 40 mol% der p-PDA/m-PDA-Mischung mit 4,4' ODA ersetzt worden. Dadurch konnte eine Kostenreduktion erreicht werden, obwohl zugleich sichergestellt wurde, dass das Material nach dem Direct Forming Verfahren und nach dem Hot Compression Molding Verfahren sehr gut verarbeitbar bleibt. Die Kosten-reduktion rührt daher, dass durch den Einsatz von ODA weniger des teuren BPDA im Polyimid benötigt zu wird um jeweils 1 kg Polymer herzustellen. Ausgehend von der US 5886129 war es nicht absehbar, dass dieses möglich ist.

Während die spezifische Oberfläche nach BET des erfindungsgemäßen Polyimidpulvers beim Hot Compression Molding Verfahren keine wesentliche Auswirkung zu haben scheint, haben die Erfinder überraschen herausgefunden, dass sie in direktem Zusammenhang mit dessen Direct Forming Fähigkeit steht.

Mit dem erfindungsgemäßen Polyimidpulver ist es somit gelungen ein hochleistungsfähiges Polymerpulver insbesondere für das Hot Compression Molding und das Direct Forming Verfahren zur Verfügung zu stellen.

Im Gegensatz zu P84® NT1 und NT2 handelt es sich bei dem im erfindungsgemäßen Polyimidpulver vorhandenen Polymer nicht um ein Blockcopolymer, sondern um ein statistisches Copolymer, dessen Herstellung einfacher und kostengünstiger ist.

Das im erfindungsgemäßen Polyimidpulver enthaltene Polymer wird aus großtechnisch verfügbaren und preiswerten Monomeren hergestellt, was ebenfalls zu ökonomischen Vorteilen führt.

Mit dem erfindungsgemäßen Polyimidpulver können Hersteller von Formteilen ohne eigene Polymerproduktion selbst Compounds und Formteile herstellen. Diese Option ist ihnen, im Stand der Technik bekannten Polyimiden verwehrt, da diese nur als Formteil oder Halbzeug verfügbar sind.

Bevor die Erfindung nachfolgend im Detail erläutert wird werden einige Begriffe näher definiert.

"Polyimidpulver" entspricht einem aus einem Polyimidpolymer hergestelltes Pulver. Erfindungsgemäße Polyimidpulver werden vorzugsweise dem aus dem erfindungsgemäßen Verfahren nach den unten näher erläuterten Schritten i) bis v) erhaltenen Pulver.

Unter "Rohpulver" wird das Pulver verstanden, aus dem der Formkörper hergestellt wird. Das Rohpulver kann mehrere verschiedene Polyimidpulver enthalten von denen mindestens eines ein erfindungsgemäßes Polyimidpulver ist. Sind mehrere unterschiedliche Polyimidpulver enthalten, so sind bevorzugt mehr als 50 Gew. %, besonders bevorzugt mehr als 70 Gew. %, ganz besonders bevorzugt mehr als 80 Gew. %, speziell bevorzugt mehr als 90 Gew. % und ganz speziell bevorzugt mehr als 90 Gew. % des Polyimidpulveranteils im Rohpulver erfindungsgemäße Polyimidpulver. In der am meisten bevorzugten Variante umfassen die Rohpulver als Polyimidpulver ausschließlich erfindungsgemäße Polyimidpulver. Enthält das Rohpulver ausschließlich ein erfindungsgemäßes Polyimidpulver, so entspricht das "Rohpulver" dem "Polyimidpulver".

Neben Polymerpulvern kann das Rohpulver aber auch noch weitere Zusatzstoffe enthalten. In diesem Fall wird das Rohpulver auch als "Compound" bezeichnet. Die Zusammensetzung solcher Compounds wird weiter unten näher erläutert.
Die erfindungsgemäßen Formkörper werden hergestellt aus einem Rohpulver, welches ein Polyimidpulver umfasst, dessen Polyimidpolymer aus mindestens einer aromatischen Tetracarbonsäuredianhydrid Komponente (A) und mindestens einer Diaminkomponente (B) zusammengesetzt ist,
dadurch gekennzeichnet,
dass mindestens eine aromatische Tetracarbonsäuredianhydrid Komponente (A) zu 60 bis 100 mol% aus 3,3',4,4'-Biphenyltetracarbon-säuredianhydrid (BPDA) und zu 40 bis 0 mol% aus Pyromellitsäuredianhydrid (PMDA) besteht
und
mindestens eine Diaminkomponente (B) eine Mischung aus
p-Phenylendiamin (p-PDA), m-Phenylendiamin (m-PDA) und 4,4'-Diaminodiphenylether (ODA) ist.

Bevorzugt werden die erfindungsgemäßen Formkörper aus einem Rohpulver hergestellt, welches ein Polyimidpulver umfasst, welches wiederum aus einem Polyimidpolymer besteht, das aufgebaut ist aus: mindestens einer, bevorzugt einer, aromatischen Tetracarbonsäuredianhydrid Komponente (A), die zu 60 bis 100 mol% aus 3,3',4,4'-Biphenyltetracarbon-säuredianhydrid (BPDA) und zu 40 bis 0 mol% aus Pyromellitsäuredianhydrid (PMDA) besteht,
und
mindestens einer, bevorzugt einer, Diaminkomponente (B), bei der es sich um eine Mischung aus p-Phenylendiamin (p-PDA), m-Phenylendiamin
(m-PDA) und 4,4'-Diaminodiphenylether (ODA) handelt.

Die für das Direct Forming Verfahren besonders geeignete Form des erfindungsgemäßen Polyimidpulvers weist eine BET Oberfläche im Bereich von 10 bis 200 m²/g, bevorzugt von 20 bis 150 m²/g, besonders bevorzugt von 40 bis 120 m²/g und ganz besonders bevorzugt von 60 bis 100 m²/g auf. Ist die spezifische Oberfläche nach BET zu klein, so verliert das Material seine Direct Forming Fähigkeit und es können keine Teile mit ausreichenden mechanischen Eigenschaften nach diesem Verfahren hergestellt werden.

Die aromatische Tetracarbonsäuredianhydrid Komponente (A) besteht bevorzugt zu 65 bis 100 mol% aus BPDA und zu 35 bis 0 mol% aus PMDA, besonders bevorzugt zu 70 bis 100 mol% BPDA und 30 bis 0 mol% aus PMDA, ganz besonders bevorzugt zu größer gleich 95 mol% BPDA und speziell bevorzugt zu 100 mol% aus BPDA. In einer alternativen Ausführungsform besteht sie bevorzugt zu 65 bis 95 mol% aus BPDA und zu 35 bis 5 mol% aus PMDA, speziell bevorzugt zu 67 bis 90 mol% BPDA und 33 bis 10 mol% aus PMDA. Die Wahl des Tetracarbonsäuredianhydrids hat einen Einfluss auf den Glaspunkt des Polyimidpolymers. Dieser steigt mit zunehmendem PMDA-Gehalt. Ein steigender Glaspunkt wiederum führt zu einer steigenden Sintertemperatur und erhöht die inhärente Viskosität. Damit wird die Verarbeitbarkeit des erfindungsgemäßen Polyimidpulvers im Hot Compression Molding Verfahren schlechter. Bei einem PMDA Gehalt von über ca. 40 mol% steigt der Gewichtsverlust an, die thermooxidative Stabilität des Materials nimmt dabei ab.

Die Diaminkomponente (B) besteht bevorzugt zu 60 bis 99 mol% aus PDA und zu 40 bis 1 mol% aus ODA, bevorzugt zu 65 bis 95 mol% aus PDA und zu 35 bis 5 mol% aus ODA und besonders bevorzugt zu 65 bis 80 mol% PDA und 35 bis 20 mol% aus ODA. Das Verhältnis von PDA zu ODA hat ebenfalls einen Einfluss auf den Glaspunkt des Polyimides. Dieser sinkt mit steigendem Gehalt an ODA. Ein zu niedriger Glaspunkt führt zu einer unzureichenden thermischen Beständigkeit. Bei einem ODA Gehalt von über 40 mol% steigt der Gewichts-verlust an, die thermooxidative Stabilität des Materials nimmt dabei ab.

"PDA" steht im Rahmen der vorliegenden Erfindung für ein Gemisch aus p-PDA und m-PDA, wobei das Verhältnis p-PDA zu m-PDA bevorzugt im Bereich von 5: 95 bis 95 : 5, besonders bevorzugt im Bereich von 20:80 bis 95:5, ganz besonders bevorzugt im Bereich von 50:50 bis 95:5, speziell bevorzugt im Bereich von 60:40 bis 85:15 und ganz speziell bevorzugt im Bereich von 60:40 bis 70:30 liegt. Das Verhältnis von p-PDA zu m-PDA hat einen Einfluss auf den Glaspunkt des Polyimides und die Verarbeitung nach dem Direct Forming Verfahren. Polyimide mit einem höheren Anteil an m-PDA Diamin weisen einen höheren Glaspunkt auf. Polyimide mit Mischungen aus p-PDA und m-PDA weisen eine bessere Direct Forming Fähigkeit auf und ergeben Formteile mit besseren mechanischen Eigenschaften als Formteile aus Polyimiden, die jeweils nur ein Isomer in Reinform aufweisen.

Wie bereits erwähnt sorgt die Zusammensetzung des erfindungsgemäßen Polymers dafür, dass die erfindungs-gemäßen Formteile und das erfindungsgemäße Pulver eine sehr gute thermooxidative Beständigkeit aufweisen. So liegt der Gewichtsverlust des unbehandelten erfindungsgemäßen Pulvers nach einer Verweilzeit von 400 bis 1400 min im Luftstrom bei 400°C im Bereich von 0,25 bis 0,5 Gew. %. Im Vergleich dazu liegen die P84® NT Typen unter denselben Bedingungen bei Gewichtsverlusten von über 2 Gew. %. Ein Polyimid, das nur aus PMDA und ODA besteht, z. B. Vespel SP weist einen Gewichtsverlust unter diesen Bedingungen von 1,5 Gew. % auf.

Das erfindungsgemäße Polyimidpulver weist bevorzugt eine inhärente Viskosität in konzentrierter Schwefelsäure, vor der Herstellung der Formteile und dem Sintern, von 10 bis 100 ml/g, bevorzugt von 15 bis 80 ml/g und besonders bevorzugt 20 bis 50 ml/g auf. Die inhärente Viskosität als Maß für die Molmasse des ansonsten in aprotisch dipolaren Lösungsmitteln unlöslichen erfindungsgemäßen Polyimides hat einen Einfluss auf die mechanischen Eigenschaften der daraus hergestellten Formteile. Ist die inhärente Viskosität zu klein, so verschlechtern sich die mechanischen Eigenschaften für eine technische Anwendung des Formteiles.

Ferner weist das erfindungsgemäße Polyimidpulver bevorzugt eine Korngröße d90 von 1 bis 300 µm, bevorzugt von 5 bis 150 µm, besonders bevorzugt von 10 bis 100 µm und speziell bevorzugt von 15 bis 80 µm auf. Die Korngröße beeinflusst die Direkt Forming Eigenschaften des erfindungsgemäßen Polyimidpulvers. Pulver mit geringerer Korngröße sind besser nach dem Direct Forming Verfahren verarbeitbar und ergeben Formteile mit besseren mechanischen Eigenschaften.

Ein bevorzugtes Verfahren zur Herstellung des erfindungsgemäßen Polyimid Pulvers umfasst die nachfolgenden Schritte:
i) Herstellung einer Polyamidsäure aus mindestens einer Tetracarbonsäuredianhydrid Komponente (A) und einer Diaminkomponente (B) in einem aprotisch dipolaren Lösungsmittel
ii) Imidisierung der Polyamidsäure
iii) Fällung des entstandenen Polyimids
iv) Waschen des Polyimidpulvers
v) Trocknen des Polyimidpulvers
wobei die Schritte ii) und iii) separat oder zusammen in einem Schritt und die Schritte iv) und v) in den weiter unten beschriebenen Reihenfolgen ausgeführt werden können.

In Schritt i) setzt man bevorzugt BPDA oder ein Gemisch aus BPDA und PMDA als Komponente (A) mit einer Mischung aus
p-PDA, m-PDA und ODA als Komponente (B) in einem aprotisch dipolaren Lösungsmittel um.

Die jeweiligen Verhältnisse von BPDA und PMDA bzw. von
p-PDA, m-PDA und ODA in den Komponenten (A) und (B) werden wie weiter oben beschrieben gewählt.

Als aprotisch dipolare Lösungsmittel werden bevorzugt Dimethylsulfoxid, Dimethylformamid, Dimethylacetamid, N-Methylpyrrolidinon, N-Ethylpyrrolidinon, Sulfolan, Pyridin oder Mischungen davon verwendet.

Die Reaktion kann derart durchgeführt werden, dass die Diamine vorgelegt und die Dianhydride zugegeben werden, es ist jedoch auch möglich, die Dianhydride vorzulegen und die Diamine zuzugeben. Die Zugabe der zweiten Komponente kann Portionsweise erfolgten, bevorzugt ist jedoch eine kontinuierliche Zugabe.

Die Umsetzung erfolgt vorzugsweise bei -10 bis 80°C, ganz besonders bevorzugt bei 0 bis 30 °C, weil die Reaktion exotherm ist und bei höheren Temperaturen die Polyamidsäure imidisiert. Das dabei freiwerdende Wasser baut die Polyamidsäure durch autokatalytische Hydrolyse ab.

In Schritt i) entsteht eine Polyamidsäure, die in den nachfolgenden Schritten in ein Polyimid überführt wird. Hier sind die gängigen Imidisierungsverfahren aus der Literatur anzuwenden wie zum Beispiel eine thermische Imidisierung oder eine chemische Imidisierung.

Die chemische Imidisierung erfolgt bevorzugt mit einer Base, besonders bevorzugt mit einer tertiären Stickstoffbase, insbesondere Pyridin oder Triethylamin, und bevorzugt einem wasserentziehenden Mittel, besonders bevorzugt Essigsäureanhydrid, Trifluoressigsäureanhydrid oder Acetylchlorid oder Thionylchlorid.

Da die chemische Imidisierung ein unlösliches Polyimid ergibt, fällt dieses gleich nach der Zugabe der Imidisierungsmittel aus oder bildet ein Gel, das zerkleinert und gewaschen werden muss. Eine Kontrolle der Partikelgröße des erfindungsgemäßen Pulvers ist schwierig, daher ist die thermische Imidisierung bevorzugt.

Besonders bevorzugt, da sehr ökonomisch wird thermisch wie folgt imidisiert:
Die Polyamidsäure aus Schritt i) wird, bevorzugt kontinuierlich, besonders bevorzugt unterspiegelig, d.h. unterhalb des Flüssigkeitsspiegels, in ein siedendes aprotisch dipolares Lösungsmittel geleitet und dadurch die Polyamidsäure thermisch imidisiert und unter Wasser-abspaltung in ein Polyimid überführt. Das entstehende Reaktionswasser wird kontinuierlich, bevorzugt durch Destillation, aus dem System entfernt. Das entstandene Polyimid ist unlöslich und fällt aus. Die unterspiegelige Einleitung hat den Vorteil, dass verhindert wird, dass die Rührerwelle und die Blätter eine Belegung durch eingeleitete Polyamidsäure bekommen.

Als aprotisch dipolares Lösungsmittel wird bevorzugt das gleiche Lösungsmittel wie in Stufe i) verwendet.

Die Polyamidsäure wird in das siedende aprotisch dipolare Lösungsmittel unter Rühren eingebracht. Das Lösungsmittel enthält vorzugsweise eine Säure oder ein Amin als Katalysator und optional ein Fällhilfsmittel, um die Imidisierungsreaktion zu katalysieren. Bevorzugt werden Säuren, besonders bevorzugt Mineralsäuren oder organische Säuren, ganz besonders bevorzugt Phosphorsäure oder Benzolphosphonsäure als Katalysator in Mengen von 0,1 bis 3 Gew% bezogen auf die Polyamidsäure, bevorzugt 0,25 bis 2 Gew%, eingesetzt. Da Wasser bei der Imidisierung aus dem Reaktor entfernt werden muss ist es bevorzugt mit dem Katalysator kein unnötiges Wasser einzutragen. Daher ist es bevorzugt möglichst wasserfrei, besonders bevorzugt wasserfreie Katalysatoren zu verwenden.

Wenn die Imidisierung eingetreten ist, fällt das Polyimid als feiner Niederschlag aus, d.h. die Schritt ii) und iii) schmelzen zu einem Schritt zusammen.

Das bei der Reaktion entstehende Imidisierungswasser wird aus dem System bevorzugt durch einfache kontinuierliche Destillation entfernt. Dabei ist kein Schleppmittel, das ein ternäres Siedegemisch mit Wasser ergibt, wie z.B. Toluol oder Xylol erforderlich. Es wird so viel Lösungsmittel aus dem System abgezogen, dass der Inhalt des Reaktors auch bei kontinuierlicher Zuführung von Polyamidsäure konstant bleibt. Im Gegensatz zum Batchbetrieb (Aufheizen einer Polyamidsäure in einem Lösungsmittel bis zum Siedepunkt) entsteht bei der kontinuierlichen Zugabe nur eine kleine Menge Wasser pro Zeiteinheit, die leicht und schnell aus dem System durch Destillation entfernt werden kann. Dadurch ist eine Hydrolyse der Polyamidsäure durch das Imidisierungswasser deutlich unterdrückt. Des Weiteren ist die Reaktion quasi pseudoverdünnt, da immer nur eine kleine Menge an Polyamidsäure in Lösung ist. Daher können sehr kleine Teilchen (< 100 µm) hergestellt werden. Die Korngröße ist umso kleiner, je verdünnter im Prozess gearbeitet wird. Ein hoher Feststoffgehalt in der resultierenden Suspension fördert die Agglomeration der Partikel, weshalb ein gröberes Polyimidpulver erhalten wird. Ein Mahlprozess ist nicht notwendig. Nach erfolgter Zugabe und etwaiger Nachreaktionszeit für etwa 1 bis 2 h, vorzugsweise bei Siedetemperatur des Lösungsmittels, wird die Suspension abgekühlt und aufgearbeitet.

Die Korngröße des erfindungsgemäßen Polymerpulvers kann durch Zugabe von Additiven, bevorzugt Fällhilfsmitteln, in das aprotisch, dipolare Lösungsmittel vor dem Start des Imidisierungsschrittes maßgeblich gesteuert werden. Durch die Zugabe der Additive wird die Keimbildung des Polymerpartikels bei der Fällung beschleunigt. Es werden bevorzugt anorganische, im Lösungsmittel unlösliche Stoffe eingesetzt, besonders bevorzugt pyrogene Kieselsäure(Aerosil), pyrogene Metalloxide (Aeroxide AluC), Graphit oder Alkalisalze. Bevorzugt werden hier Additive eingesetzt, welche auch für die Compoundierung des Pulvers eingesetzt werden (Graphit) oder welche keinerlei Einfluss auf die thermooxidative Beständigkeit haben (pyrogene Kieselsäuren). Die Konzentration der Additive sollte zwischen 0,01% und 1% bezogen auf das vorgelegte Lösungsmittel, bevorzugt zwischen 0,03% und 0,7%, speziell bevorzugt zwischen 0,05% und 0,5% betragen.

Die Siedetemperatur des Lösungsmittels sollte zwischen 140°C und 300°C liegen, bevorzugt zwischen 145°C und 180°C und ganz besonders bevorzugt zwischen 150°C und 170°C liegen. Bei hochsiedenden Lösungsmitteln kann der Siedepunkt auch durch Anlegen eines Unterdrucks reduziert bzw. eingestellt werden. Ist die Temperatur zu niedrig, so sinkt die Imidisierungsgeschwindigkeit ab. Wird die Temperatur zu hoch gewählt, so kann es zum Zusammenbacken der Polyimidpartikel kommen.

In einer speziellen Ausführungsform des erfindungsgemäßen Verfahrens wird der Imidisierungsprozess kontinuierlich in zwei oder mehr in Kaskade geschalteten Rührkesseln durchgeführt, wobei man eine Polyamidsäure-Lösung aus Schritt i) kontinuierlich in ein siedendes aprotisch dipolares Lösungsmittel im ersten der Rührkessel einbringt, einen Teil des Lösungsmittels zur Entfernung des Imidisierungswasser abdestilliert, die überschüssige Suspension in den zweiten Rührkessel leitet und dort wieder einen Teil des Lösungsmittels zur Entfernung des Imidisierungswassers abzieht und abschließend aus dem letzten Kessel der Rührkesselkaskade die fertige Suspension entnimmt. Dieser Prozess hat den Vorteil, dass es ein kontinuierlicher ist und damit ein sehr gleichmäßiges Produkt hergestellt werden kann.

Das Pulver liegt nach der Imidisierung in der Regel in einer lösungsmittelhaltigen Suspension vor. In diesem Fall ist es bevorzugt das Pulver vom Lösungsmittel und vom Katalysator zu befreien.

Ein bevorzugter Weg ist die Verdampfung des Lösungsmittels, bevorzugt via Sprühtrocknung (Schritt v)), gefolgt von einer Extraktion des Pulvers mit Wasser in Schritt iv), zur Entfernung des Katalysators.

Ein anderer, ebenfalls bevorzugter Weg ist die Verdrängung von Lösungsmittel und Katalysator durch eine Verdünnungswäsche in Schritt iv). Die Suspension wird dabei mit Wasser versetzt und abfiltriert. Der entstehende Filterkuchen oder die konzentrierte Suspension wird wieder mit Wasser versetzt und erneut filtriert. Der Vorgang wird wiederholt, bis das Lösungsmittel und der Katalysator ausgewaschen sind. Als Filtermaterialien können zum Beispiel, aber nicht ausschließlich Metallgewebe, Glasfritten, Gewebefilter und Membranen dienen.

Ein besonders bevorzugter Weg zur Waschung des Pulvers ist die Anwendung eines Querstromfiltrationsverfahrens, das eine poröse Membran einsetzt. Damit wird das Pulver zurückgehalten und die flüssige Phase passiert die Membran. So kann das Lösungsmittel und der Katalysator durch eine Verdünnungswäsche ausgetragen werden, sodass nur noch eine minimale Menge an Lösungsmittel und/oder Katalysator im System verbleibt.

Die Pulversuspension bzw. der nasse Filterkuchen werden dann in Schritt v) mit herkömmlichen Trocknungsverfahren getrocknet wie z.B. aber nicht ausschließlich, Dünnschichtverdampfer, Sprühtrockner, Sprühgranulierer, Trockenschränke, Horizontal-, Vertikaltrockner oder beheizbare Filternutschen. Getrocknet wird dabei bevorzugt bei Temperaturen von 50 bis 200°C, besonders bevorzugt 50 bis 150°C, ganz besonders bevorzugt 60 bis 140°C, speziell bevorzugt bei 70 bis 130°C und ganz speziell bevorzugt 80 bis 120°C. Eine Trocknung bei höheren Temperaturen kann zu einer unerwünschten Verkleinerung der spezifischen Oberfläche nach BET führen, so dass das Pulver nur noch nach dem Hot Compression Molding Verfahren verarbeitet werden kann.

Wenn das erfindungsgemäße Pulver mittels Hot Compression Molding verarbeitet werden soll, so muss es nach dem Trocknen noch auf mindestens 250°C aufgeheizt werden, um erstens eine vollständige Nachimidisierung zu erreichen und zweitens eine Abtrennung von flüchtigen Bestandteilen zu gewährleisten. Dies ist notwendig, um die Hohlraumbildung und damit Fehlstellen während des Hot Compression Molding Prozesses zu verhindern.

Das erfindungsgemäße Pulver wird bevorzugt gewaschen, bis der Lösungsmittelgehalt kleiner gleich 1 Gew. %, bevorzugt 0,001 bis 0,5 Gew. %, besonders bevorzugt < 0,1 Gew% und ganz besonders bevorzugt < 0,01% beträgt. Ein höherer Anteil an flüchtigen Bestandteilen würde ansonsten im Hot Compression Molding und im Direct Forming den Prozess stören.

Das erfindungsgemäße Pulver ist sehr gut nach dem Hot Compression Molding Verfahren zu verarbeiten. Liegt die BET-Oberfläche des erfindungsgemäßen Pulvers im oben genannten Vorzugsbereich, so wird durch die besondere Kombination aus Polymerzusammensetzung und spezifischer Oberfläche nach BET erreicht, dass das erfindungsgemäße Polyimidpulver auch hervorragend Direct Forming fähig ist. Das erfindungsgemäße Pulver zeigt zudem durch seine thermooxidative Stabilität deutliche Vorteile gegenüber P84®NT1 und P84®NT2 sowie gegenüber Sintimid 1000®.

Für die Herstellung von Formkörpern ist es möglich dem Rohpulver neben dem erfindungsgemäßen Polyimidpulver auch andere Polyimidpulver und/oder Zuschlagsstoffe zuzugeben. Dazu werden Compounds aus dem/den Polyimidpulver(n) und den Zuschlagsstoffen hergestellt.

Prinzipiell sind alle Zuschlagstoffe möglich, die den Hot Compression Molding oder Direct Forming Prozess unbeschadet überstehen. Es kommen zum Beispiel, aber nicht ausschließlich folgende Füllstoffe in Frage: Polytetrafluorethylen, Grafit, Molybdändisulfid, Bornitrid, Metalloxide, Kohle- und Glasfasern, Calciumcarbonat, Bariumsulfat, Metalle, Siliziumdioxyd und Mischungen aus den vorgenannte Substanzen. Die Menge an Zuschlagsstoff, bevorzugt einem Füllstoff oder einer Füllstoffmischung kann, bezogen auf die Menge des Polymeren, zwischen 0,1 Gew. % und 90 Gew. % liegen.

Die Compounds können nach drei verschiedenen Verfahren hergestellt werden.

### Verfahren 1:

Der Zuschlagsstoff wird in diesem Verfahren im Imidisierungsschritt ii) eingebracht. Vor dem Start der Imidisierung wird der Zuschlagsstoff im siedenden Lösungsmittel suspendiert. Durch die Imidisierung wird insbesondere bei einigen Füllstoffen (z.B. Grafit, Molybdändisulfid, Kohlefasern) eine Beschichtung mit dem erfindungsgemäßen Polymeren erreicht. Dies verbessert die Haftung zwischen Füllstoff und Matrix und erhöht die mechanischen Festigkeiten der Compounds. Die Umhüllung des Zuschlagsstoffs durch das Polyimidpulver ist bevorzugt zwischen 0,1 µm und 50 µm dick.

### Verfahren 2:

Nachdem die Polymersuspension wie oben beschrieben vom Lösungsmittel und vom Katalysator befreit worden ist, kann in die wässrige Suspension der Zuschlagsstoff, bevorzugt ein Füllstoff eingerührt werden. Durch die weiter vorne beschriebenen Trenn- und Trocknungsverfahren wird ein sehr homogener Compound hergestellt.

### Verfahren 3:

Nach dem Trocknen der Polymersuspension erhält man ein erfindungsgemäßes Pulver. Zu diesem Pulver kann in einem geeigneten Trockenmischer der Zuschlagstoff, bevorzugt ein Füllstoff, hinzugegeben werden. Eine gute Mischung ist nur durch einen hohen Schereintrag zu erreichen, damit etwaige Aggregate zerschlagen werden.

Aus dem erfindungsgemäßen Polyimidpulver bzw. den erfindungsgemäßen Compounds können wie bereits mehrfach erwähnt Formkörper hergestellt werden. Besonders bevorzugt werden die Formkörper mittels Direct Forming oder Hot Compression Molding Verfahren hergestellt. Andere in Frage kommende Verfahren können z. B. Hot Coining oder RAM Extrusion sein.

Im bevorzugten Direct Forming Verfahren formt man zunächst ein Pressteil, in dem man ein Rohpulver, umfassend oder bestehend aus das/dem erfindungsgemäße(n) Polyimidpulver oder Composit, bei hohen Drücken von 0,1 bis 10 to/cm², bevorzugt 2 bis 7 to/cm² bei einer Temperatur zwischen 0°C und 100°C, bevorzugt zwischen 15 und 40 °C verpresst. Die dabei erhaltenen Pressteile (genannt Grünteile), bevorzugt mit einer Dichte > 1,20 g/ml, besonders bevorzugt 1,25 bis 1,5 und ganz besonders bevorzugt 1,25 bis 1,4 g/ml, werden dann, bevorzugt in einer Luft- oder Schutzgasathmosphäre wie zum Bespiel Stickstoff, bei Temperaturen von 250 bis 600°C, bevorzugt 300 bis 500 °C, besonders bevorzugt bei 350 bis 480 °C und ganz besonders bevorzugt bei 350 bis 450 °C für 0,1 bis 10, bevorzugt für 1 bis 3 Stunden gesintert. Besonders bevorzugt werden die Teile im Sinterofen mit einer Rampe von 0,1 bis 5°C/min, speziell bevorzugt mit 0,5 bis 2°C/min bis zur finalen Sintertemperatur aufgeheizt.

In einem bevorzugten Hot Compression Molding Verfahren stellt man einen Formkörper her, in dem man ein Rohpulver, umfassend oder bestehend aus das/dem erfindungsgemäße(n) Pulver oder Composit, bei Drücken von 100 bis 1000 bar, bevorzugt 300 bis 500 bar und einer Temperatur oberhalb des Glaspunktes des Polymers, bevorzugt bei 300 bis 500 °C, bis zur vollständigen Versinterung verpresst.

Die erfindungsgemäßen Formteile (die Begriffe "Formkörper" und "Formteile" werden synonym verwendet) werden zur Herstellung von Kunststoffformkörpern nach gängigen mechanischen und thermischen Bearbeitungs- und Umformungsverfahren, insbesondere als Greifer in der Glasindustrie oder als Lager und Rollbuchsen, Dichtungen und Dichtringe, Führungen, Ventilsitzen, Absperrventile, Bremsbeläge, Ventile in Turboladern oder Kompressoren, Lagerkomponenten wie Käfige oder Kugeln, Zündkerzenstecker, Testsockets und Waferhalter in der Elektronikindustrie, Elektrische und thermische Isolationsteile, Kolbenringe für Kompressoren, Druckringe für Getriebe, strahlungs- und chemikalienbeständige Rohrdichtungen, Bremsbeläge, Reibbeläge, kunstharzgebundene Diamantwerkzeuge oder Ferrule in der Gaschromatographie, verwendet.

### Meßmethoden:

### Spezifische Oberfläche nach BET:

Die Proben werden vor der Messung bei 50°C bis zu einem Druck von 9 µm Hg entgast. Die Stickstoffsorptionsmessung wird anschließend auf einem Micromeritics ASAP 2020 bei einer Temperatur von 77 K durchgeführt. Die spezifische Oberfläche wird nach dem Model von Brunauer, Emmet und Teller (BET) berechnet.

### Bestimmung des Molekulargewichts M_{w}, Mₚ und Mₙ der Polyamidsäuren

Die Molmassenbestimmung erfolgt mit Hilfe einer Gelpermeationschromatographie. Die Kalibrierung erfolgt mit Polystyrolstandards. Die berichteten Molmassen sind daher als relative Molmassen zu verstehen.

Folgende Komponenten und Einstellungen wurden verwendet:

| | |
|---|---|
| HPLC | WATERS 600 Pumpe, 717 Autoinjektor, 2487 UV-Detektor |
| Vorsäule | PSS SDV Vorsäule |
| Säulen | PSS SDV 10µm 1000, 10⁵ und 10⁶ Å |
| Laufmittel | 0.01M LiBr + 0.03M H₃PO₄ in DMF (sterilfiltriert, 0.45µm) |
| Fluss | 1.0 ml/min |
| Laufzeit | 45 min |
| Druck | ∼1550psi |
| Wellenlänge | 270nm (bei Verwendung des UV-Detektors) |
| Injektions-volumen | 50µl bzw. 20µl (für Lösungen c >1g/l) |
| Standards | PS(Polystyrol)-Standards (engverteilt, 300-3·10⁶, PSS) |

### Überprüfung der thermooxidativen Beständigkeit:

Ca. 10 mg des zu untersuchenden Polymerpulvers (Rohpulver ohne PTFE Zusatz) werden auf 400°C in einem Strom von synthetischer Luft mit 5°C/min aufgeheizt. Man verfolgt nun den Gewichtsverlust über die Zeit. Als Analyseergebnis gilt der Gewichtsverlust innerhalb von 1000 min zwischen einer Laufzeit von 400 bis 1400 min.

### Bestimmung der inhärenten Viskosität:

Die inhärente Viskosität wird durch Bestimmung der kinematischen Viskosität mittels eines Ubbelohde-Viskosimeter bestimmt. Dafür werden 250 mg des Polyimidpulver in einen 50ml Kolben eingewogen und dieser zu 2/3 mit konz. Schwefelsäure versetzt. Nach dem vollständigen Auflösen wird der Kolben mit konz. Schwefelsäure auf 50 ml aufgefüllt und anschließend filtriert. Danach wird die Lösung in die Ubbelohde Kapillare überführt. Die Messung selbst wird bei 25°C durchgeführt.

### Messung Pulverkorngröße (trocken. Nass)

Die Messung der Pulverkorngröße wird mittels Malvern Mastersizer 2000 durchgeführt und sowohl direkt aus der gefällten Suspension, als auch aus dem getrockneten Pulver bestimmt. Für die Bestimmung der Korngrößenverteilung in der Suspension wird die Nassdispergiereinheit HydroS, für die Bestimmung des Pulvers die Trockendispergiereinheit Scirocco verwendet.
Das Prinzip der Messung beruht auf der Laserbeugung, wobei die Intensität des gestreuten Lichts eines Laserstrahls gemessen wird, der eine dispergierte Probe durchdringt. Laut Fraunhofer-Theorie erzeugen kleinere Partikel einen größeren Streuwinkel. Aus dem erhaltenen Beugungsmuster werden die Größe der Partikel und eine statistische Verteilung berechnet. Für die Messung mittels Nassdispergiereinheit werden einige wenige Tropfen, für die Messung mittels Trockendispergiereinheit 2 - 3 g (je nach Schüttdichte) der Probe eingesetzt.

### Bestimmung der Dichte des Grünteils bzw. Sinterteil

Zur Bestimmung der Dichte der Formteile werden die Teile gewogen und mittels Schiebelehre vermessen. Aus den gemessenen Daten wird anschließend die Dichte des jeweiligen Formteils berechnet.

### Bestimmung Druckfestigkeit, Biegebruchfestigkeit, E-Modul und Dehnung

Die Bestimmung der Druckfestigkeit des gesinterten Formteils wird mittels *Zwick Universalprüfmaschine Z050* mit einer 50kN Kraftmessdose gemäß der Norm EN ISO 604 durchgeführt. Die Prüfgeschwindigkeit beträgt 2 mm/min. Ausgewertet werden dabei E-Modul, Kraftmaximum und Dehnung bei Kraftmaximum. Die Bestimmung der Biegebruchfestigkeit des gesinterten Formteils wird mittels *Zwick Universalprüfmaschine Z050* mit einer 1kN Kraftmessdose gemäß der Norm EN ISO 178 durchgeführt. Die Prüfgeschwindigkeit beträgt 10 mm/min. Ausgewertet werden dabei E-Modul, Kraftmaximum und Dehnung bei Bruch.

Die nachfolgenden Beispiele dienen zur näheren Erläuterung und zum besseren Verständnis der vorliegenden Erfindung, schränken diese aber in keiner Weise ein.

### Beispiel 1: Herstellung der Polyamidsäure

In einen 130 L Reaktor ausgerüstet mit einem Rückfluss-kühler, Reaktorkühlung, Rührwerk und Stickstoffspülung werden 1468 g (7,333 mol) 4,4'-Oxydianilin, 529 g (4,889 mol) m-Phenylendiamin und 1057 g (9,778 mol) p-Phenylen-diamin vorgelegt und in 90760 g DMF gelöst. Die klare Lösung wird anschließend auf 15°C gekühlt. In mehreren Schritten werden 6300g (21,413 mol) 3,3',4,4'-Biphenyltetracarbonsäuredianhydride (BPDA) zugesetzt, wodurch eine langsame Zunahme der Viskosität der Lösung zu beobachten ist. Zur besseren Kontrolle des Prozesses werden zusätzlich 128 g (0,587 mol) Pyromellitsäuredianhydrid (PMDA) gelöst in 1152 g DMF zudosiert, wo durch die Viskosität weiter ansteigt, Diese viskose Lösung wird nach Ende der Viskositätszunahme 3 h bei 15°C gerührt und anschließend in einen Vorlagebehälter für die nachfolgende Imidisierung gepumpt. Der Vorgang der Polyamidsäure-herstellung wird darauf einmal wiederholt, sodass 200 kg Polyamidsäurelösung zur Verfügung stehen.

Die Gelpermeationschromatographie der Polyamidsäure weist eine Molmasse Mₙ von 137047 Da, M_{w} von 396919 Da und Mₚ von 356559 Da auf.

### Beispiel 2: Herstellung des Polyimids

In einem 250L Reaktor mit Destillationskolonne und Rückflusskühler, Rührwerk, Heizung und Dosiervorlage werden 90 kg DMF vorgelegt und 1 kg Phosphorsäure darin gelöst. Die Lösung wird zum Sieden erhitzt. In das siedende Lösungsmittel wird anschließend die in Beispiel 1 hergestellte Polyamidsäure mit einer Geschwindigkeit von 43 kg/h zudosiert, während gleichzeitig am Kopf der Destillationskolonne 32 kg Kondensat/h entnommen wird. Bereits nach geringer Zugabe bildet sich ein Niederschlag an imidisiertem Polymerpulver. Nach vollständiger Zugabe wird die Suspension noch 2 Stunden bei siedendem Lösemittel nachreagiert und fallweise Kondensat am Kopf der Destille entnommen.

Die Suspension wird auf Raumtemperatur abgekühlt und mit Wasser verdünnt. Die Suspension wird anschließend über eine Querstromfiltration solange mit Wasser gewaschen, dass die Suspension einen DMF Gehalt < 0,1% aufweist. Anschließend wird die Suspension eingedickt, 0,5% PTFE eingemischt und in einem Spühtrockner mit Zentrifugalzerstäuber bei 130°C Gastemperatur getrocknet.

Das trockene Polyimidpulver weist eine Korngröße von d(0,1) = 9,7 µm, d(0,5) = 34,4 µm und d(0,9) = 69,2 µm auf. Thermogravimetrische Untersuchungen des Pulvers zeigen einen Masseverlust von 0,41%. Eine Messung der Stickstoffsorption nach BET ergibt eine spezifische Oberfläche von 72,9 m²/g. Die Inhärente Viskosität des Polyimidpulvers beträgt 29,48 cm³/g.

### Beispiel 3: Herstellung eines Polyimidpulvers mit kleinerer Korngröße.

Die Herstellung des Polyimidpulvers wird analog zur in Beispiel 1+2 beschriebenen Arbeitsanleitung durchgeführt. Für die Polyamidsäure werden 1702 g (8,500 mol) 4,4'-Oxydianilin, 613 g (5,667 mol) m-Phenylendiamin und 1226 g (11,333 mol) p-Phenylen-diamin vorgelegt in 89348 g DMF gelöst und die Lösung auf 15°C gekühlt. In mehreren Schritten werden 7503 g (25,500 mol) 3,3',4,4'-Biphenyltetracarbonsäuredianhydride (BPDA) zugesetzt, wodurch eine stetige Zunahme der Viskosität der Lösung zu beobachten ist. Nach 3 h Rühren bei 15°C und einem weiteren Viskositätsanstieg wird die Polyamidsäure ausgepumpt und die Synthese wiederholt, sodass 200 kg Polyamidsäurelösung zur Verfügung stehen.

Zur Imidisierung der Polyamidsäure werden 90 kg DMF vorgelegt und 1 kg Phosphorsäure darin gelöst. Anschließend werden 0,225 g einer 30%igen Dispersion von Aerosil A200 in NEP (0,075% bezogen auf DMF Vorlage im Sumpf) zugesetzt. Die Imidisierung in siedenden DMF und die weitere Aufarbeitung laufen analog zu dem in Beispiel 2 beschriebenen Prozess ab.

Das trockene Polyimidpulver weist eine Korngröße von d(0,1) = 13,28 µm, d(0,5) = 27,49 µm und d(0,9) = 47,71 µm auf. Die Messung der Stickstoffsorption nach BET ergibt eine spezifische Oberfläche von 89,91 ± 0.19. Die Inhärente Viskosität des Polyimidpulvers beträgt 28,99 cm³/g.

### Beispiele 4 - 8: Herstellung neuer Polyimide mit variierender Zusammensetzung an Dianhydriden bzw. Diaminen

Neben BPDA als Dianhydrid kann auch eine Mischung aus BPDA und PMDA verwendet werden. Ebenso kann die Zusammensetzung der Diamine variiert werden. Daraus lassen sich andere erfindungsgemäße Polyimide herstellen.

Die Herstellung dieser Polyimide wird dazu in Anlehnung zu den in den Beispielen 1 und 2 beschriebenen Arbeitsvorschriften im Labormaßstab durchgeführt:
In einem 250 ml Kolben mit Stickstoffspülung wird eine definierte Mischung der drei Diamine ODA/m-PDA/p-PDA in DMF gelöst. Die klare Lösung wird anschließend auf 15°C gekühlt. In mehreren Schritten wird eine definierte Menge BPDA oder eine Mischung BPDA/PMDA zugesetzt, wodurch sich eine Zunahme der Viskosität der Lösung zu beobachten ist. Diese Lösung wird danach 12 h bei 15°C gerührt.

Die molekularen Zusammensetzungen der einzelnen Reaktionsgemische für die Polyamidsäure werden in Tabelle 1 zusammengefasst:

**Tabelle 1:**

| **Beispiel** | **BPDA [g (mol)]** | **PMDA [g (mol)]** | **ODA [g (mol)]** | **m-PDA [g (mol)]** | **p-PDA [g (mol)]** | **DMF [g]** |
|---|---|---|---|---|---|---|
| 4 | 14,711 (0,050) | - | 3,337 (0,017) | 2,403 (0,022) | 1,202 (0,011) | 175 |
| 5 | 9,807 (0,033) | 3,637 (0,017) | 3,337 (0,017) | 1,202 (0,011) | 2,403 (0,022) | 165 |
| 6 | 8,827 (0,030) | 4,364 (0,020) | 3,337 (0,017) | 1,202 (0,011) | 2,403 (0,022) | 163 |
| 7 | 29,422 (0,100) | - | 6,007 (0,030) | 6,488 (0,060) | 1,081 (0,010) | 348 |
| 8 | 17,653 (0,060) | 8,725 (0,040) | 2,002 (0,010) | 2,163 (0,020) | 7,570 (0,070) | 308 |

In einem 500 ml Kolben mit Destillationskolonne, mechanischem Rührer und Tropftrichter mit Stickstoffspülung werden 250 g DMF vorgelegt. 2,5 g Phosphorsäure werden darin gelöst und die Lösung wird zum Sieden erhitzt. Anschließend werden 160 ml der entsprechenden Polyamidsäure-Lösung langsam zugetropft, während gleichzeitig am Kopf der Destillationskolonne dasselbe Volumen Kondensat entnommen wird. Bereits nach geringer Zugabe bildet sich ein Niederschlag an imidisiertem Polymerpulver. Nach vollständiger Zugabe wird die Suspension noch 2 Stunden bei siedendem Lösemittel nachreagiert und fallweise Kondensat am Kopf der Destille entnommen. Die Suspension wird auf Raumtemperatur abgekühlt und mit Wasser verdünnt. Anschließend wird das Polymerpulver mit Wasser DMF-frei gewaschen, mittels Glassinternutsche abgetrennt und bei 70°C/Vakuum getrocknet.

Die charakteristischen Korngrößen, Glasübergängen und Gewichtsverlusten der Polyimide werden in Tabelle 2 zusammengefasst.

**Tabelle 2:**

| **Beispiel** | **Korngröße d(0,1) [µm]** | **Korngröße d(0,5) [µm]** | **Korngröße d(0,9) [µm]** | **T_{g} (DMTA) [°C]** | **Verlust TGA 1000 min/ 400°C [%]** |
|---|---|---|---|---|---|
| 4 | 37,76 | 62,59 | 92,86 | 304,5 | 0,320 |
| 5 | 24,35 | 42,06 | 81,23 | 331,5 | 0,269 |
| 6 | 24,24 | 43,50 | 98,18 | 335,0 | 0,325 |
| 7 | 9,30 | 32,19 | 67,12 | | 0,283 |
| 8 | 12,75 | 21,28 | 32,57 | | 0,303 |

### Vergleichsbeispiele 1 - 4: Herstellung von Polyimiden mit höheren Anteilen PMDA

Die Polyamidsäuren werden in Anlehnung an Beispiel 4-8 hergestellt. Die molekularen Zusammensetzungen der einzelnen Reaktionsgemische für die Polyamidsäure werden in Tabelle 3 zusammengefasst und werden bei Vergleichsbeispiel 2-4 in Anlehnung an Patent EP 1 236 756 hergestellt:

**Tabelle 3:**

| **Vergleichsbeispiel** | **BPDA [g (mol)]** | **PMDA [g (mol)]** | **ODA [g (mol)]** | **m-PDA [g (mol)]** | **p-PDA [g (mol)]** | **DMF [g]** |
|---|---|---|---|---|---|---|
| 1 | 7,356 (0,025) | 5,453 (0,025) | 3,337 (0,017) | 1,202 (0,011) | 2,403 (0,022) | 160 |
| 2 | 2,942 (0,010) | 19,631 (0,090) | 2,002 (0,010) | 3,244 (0,030) | 6,488 (0,060) | 278 |
| 3 | 2,942 (0,010) | 19,631 (0,090) | 2,002 (0,010) | 2,163 (0,020) | 7,570 (0,070) | 278 |
| 4 | 2,942 (0,010) | 19,631 (0,090) | 2,002 (0,010) | 1,081 (0,010) | 8,651 (0,080) | 278 |

Die Imidisierung und Fällung des Polyimidpulver wird in Anlehnung an Beispiel 4-8 aus jeweils 150 g Polyamidsäure durchgeführt.

Die charakteristischen Korngrößen, Glasübergängen und Gewichtsverlusten der Polyimide werden in Tabelle 4 zusammengefasst.

**Tabelle 4:**

| **Vergleichsbeispiel** | **Korngröße d(0,1) [µm]** | **Korngröße d(0,5) [µm]** | **Korngröße d(0,9) [µm]** | **T_{g} (DMTA) [°C]** | **Verlust TGA 1000 min/400°C [%]** |
|---|---|---|---|---|---|
| 1 | 23,82 | 44,04 | 113,90 | 346,0 | 0,547 |
| 2 | 5,23 | 8,68 | 15,15 | | 0,670 |
| 3 | 6,07 | 10,26 | 16,92 | | 0,508 |
| 4 | 2,55 | 18,95 | 38,63 | | 0,802 |

Die Ergebnisse in Tabelle 4 zeigen, dass die erfindungsgemäßen Polymere eine deutlich bessere thermooxidative Beständigkeit aufweisen als Polymere, die zwar aus den gleichen Monomeren, jedoch in anderen Verhältnissen, zusammengesetzt sind. Vergleichsbeispiel 3 entspricht z.B. einem Polymer gemäß EP 1 236 756 A1, Formel 3, bzw. Beispiel 5, in dem gemäß Absätzen 17 und 18 der EP 1 236 756 A1, 10 % PMDA durch BPDA ersetzt wurden. Das erfindungsgemäße Beispiel 8 weist eine identische Aminzusammensetzung auf wie Vergleichsbeispiel 3, der BPDA-Gehalt beträgt jedoch 60% und liegt dadurch am unteren Rand des beanspruchten Bereichs. Es zeigt sich, dass das erfindungsgemäße Beispiel 8, durch den in der EP 1 236 756 A1, Absatz 17, explizit nicht zulässigen höheren BPDA-Gehalt, eine deutlich bessere thermooxidative Beständigkeit aufweist als Vergleichsbeispiel 3.

### Beispiele 9 - 11: Abhängigkeit der Korngröße von zugesetzter Menge Fällhilfsmittel

Die Herstellung dieser Polyimide wird dazu in Anlehnung zu den in den Beispielen 4-8 beschriebenen Arbeitsvorschriften im Labormaßstab durchgeführt. Die molekulare Zusammensetzung einer typischen Polyamidsäure wird in Tabelle 5 zusammengefasst:

**Tabelle 5:**

| **Beispiel** | **BPDA [g (mol)]** | **ODA [g (mol)]** | **p-PDA [g (mol)]** | **m-PDA [g (mol)]** | **DMF [g]** |
|---|---|---|---|---|---|
| 9-11 | 14,711 (0,050) | 3,337 (0,017) | 2,403 (0,022) | 1,202 (0,011) | 175 |

Es werden jeweils 100 ml dieser Polyamidsäurelösung für die Imidisierung eingesetzt. Ergänzend zu der Arbeitsvorschrift aus den Beispielen 4-8 werden unterschiedliche Mengen einer 30%igen Suspension von pyrogener Kieselsäure des Typs Aerosil A200 in N-Ethylpyrrolidon (NEP) (bezogen auf vorgelegtes Lösungsmittel) vor der Imidisierung in die im Sumpf vorgelegten 250 ml Lösungsmittel beigemengt. Die eingesetzten Mengen an pyrogener Kieselsäure werden in Tabelle 6 zusammengefasst:

**Tabelle 6:**

| **Beispiel** | **Anteil Aerosil A200 bezogen auf DMF-Vorlage [%]** | **Menge 30% Dispersion Aerosil A200 in NEP** |
|---|---|---|
| 9 | 0,01 | 0,083 g |
| 10 | 0,1 | 0,833 g |
| 11 | 1 | 8,333 g |

Die Imidisierung und weitere Aufarbeitung der Polyimidpulver wird analog zu den Beispielen 4-8 durchgeführt.
Die charakteristischen Korngrößen der Polyimide werden in Tabelle 7 zusammengefasst:

**Tabelle 7:**

| **Beispiel** | **Korngröße d(0,1) [µm]** | **Korngröße d(0,5) [µm]** | **Korngröße d(0,9) [µm]** |
|---|---|---|---|
| 9 | 25,371 | 41,962 | 64,386 |
| 10 | 7,210 | 15,519 | 31,755 |
| 11 | 6,820 | 17,054 | 32,825 |

### Beispiel 12: Herstellung eines Polyimid-Graphit Compounds nach Verfahren 1

Die Herstellung dieses Polyimid-Graphit Compounds wird dazu in Anlehnung zu den in den Beispielen 4-11 beschriebenen Arbeitsvorschriften im Labormaßstab durchgeführt. Die molekulare Zusammensetzung einer dafür typischen Polyamidsäure wird in Tabelle 8 zusammengefasst:

**Tabelle 8:**

| **Beispiel** | **BPDA [g (mol)]** | **ODA [g (mol)]** | **p-PDA [g (mol)]** | **m-PDA [g (mol)]** | **DMF [g]** |
|---|---|---|---|---|---|
| 12 | 73,555 (0,250) | 16,687 (0,083) | 12,016 (0,111) | 6,008 (0,056) | 876 |

Es werden 100 ml dieser Polyamidsäurelösung für die Imidisierung eingesetzt. Ergänzend zu der Arbeitsvorschrift aus den Beispielen 4-8 werden 6,135g Graphit vor der Imidisierung in die im Sumpf vorgelegten 250 ml Lösungsmittel beigemengt. Die weitere Imidisierung und weitere Aufarbeitung der Polyimidpulver wird analog zu den Beispielen 4-8 durchgeführt.

Die charakteristischen Korngrößen des Polyimid-Graphit Compounds werden in Tabelle 9 zusammengefasst:

**Tabelle 9:**

| **Beispiel** | **Korngröße d(0,1) [µm]** | **Korngröße d(0,5) [µm]** | **Korngröße d(0,9) [µm]** |
|---|---|---|---|
| 12 | 8,640 | 17,616 | 33,136 |

### Beispiel 13: Abhängigkeit der spezifischen Oberfläche von der Temperatur

Das Polyimidpulver aus Beispiel 2 wird nach der Herstellung bei Temperaturen von 180°C, 230°C und 290°C unter Vakuum getrocknet. Die Pulver werden anschließend mittels Stickstoffsorption auf Ihre spezifische Oberfläche hin untersucht. Die spezifischen Oberflächen sind in Tabelle 10 zusammengefasst.

**Tabelle 10:**

| **Temperatur bei Trocknung [°C]** | **Spezifische Oberfläche nach BET [m²/g]** |
|---|---|
| 130 | 72,92 ± 0,12 |
| 180 | 59.53 ± 0.09 |
| 230 | 49.63 ± 0.06 |
| 290 | 28.33 ± 0.21 |

### Vergleichsbeispiele 5 und 6: Untersuchung der thermooxidativen Stabilität von P84® NT1 und P84® NT2 nach WO 2007/009652

Die nach WO 2007/009652 hergestellten Pulver an P84® NT1 und P84® NT2 werden analog zu den in Beispielen 2-9 hergestellten Pulvern auf ihre thermooxidative Stabilität hin untersucht. Die entsprechenden Werte werden in Tabelle 11 wiedergegeben.

**Tabelle 11:**

| **Vergleichsbeispiel** | | **Verlust TGA 1000 min/400°C [%]** |
|---|---|---|
| 5 | P84® NT1 | 3,71 |
| 6 | P84® NT2 | 4,62 |

Die Ergebnisse aus Tabelle 11, verglichen mit den Ergebnissen aus Tabelle 2 zeigen, dass die erfindungsgemäßen Pulver eine um den Faktor 10 bis 20 bessere thermooxidative Beständigkeit aufweisen als die Block-Copolymere aus der WO 2007/009652. Ein zusätzlicher Vorteil ist, dass es sich bei den erfindungsgemäßen Polymeren um Homopolymere handelt, welche deutlich einfacher herzustellen sind als die Blockpolymere aus der WO 2007/009652.

### Beispiel 14: Herstellung von Direct Forming Druck-Prüfkörper mit Pulvern aus Beispiel 2-5,10,13 und aus Vergleichsbeispiel 5 und 6

Es werden jeweils 1100 mg der Polyimidpulver in die Matrize der Pressform (Durchmesser 10 mm) gefüllt. Das Pulver wird danach mit einem definierten Druck gepresst. Die Grünteile werden im Anschluss mit einer definierten Rampe unter Luftatmosphäre auf die gewählte Temperatur erhitzt und bei dieser Temperatur 30 min gesintert. Die Sinterlinge werden danach auf ihre Druckfestigkeit untersucht. Tabelle 12 und 13 fassen die gewählten Press- und Sinterbedingungen zusammen.

**Tabelle 12:**

| **Polymer aus Bsp.** | **Press-druck [t/cm²]** | **Dichte Grün-teil [g/cm³]** | **Dichte Sinterteil bei 425°C (1°C/min) [g/cm³]** | **Dichte Sinterteil bei 410°C (1°C/min) [g/cm³]** | **Dichte Sinterteil bei 395°C (1°C/min) [g/cm³]** | **Dichte Sinterteil bei 410°C (2°C/min) [g/cm³]** |
|---|---|---|---|---|---|---|
| 2 | 2 | 1,30 | 1,31 | | | |
| | 3 | 1,34 | 1,33 | 1,33 | 1,33 | 1,33 |
| | 4 | 1,35 | 1,33 | 1,33 | 1,34 | 1,33 |
| | 5 | 1,36 | 1,34 | 1,34 | 1,35 | 1,34 |
| | 6 | 1,36 | 1,34 | | | |
| 3 | 3 | 1,33 | 1,32 | 1,33 | 1,34 | |
| | 4 | 1,34 | 1,33 | 1,34 | 1,34 | |
| | 5 | 1,34 | 1,34 | 1,34 | 1,34 | |
| 4 | 2,8 | 1,29 | 1,25 | | | |
| 10 | 4 | 1,35 | | | 1,34 | |
| 13 (180 °C) | 4 | 1,30 | | | | 1,29 |
| 13 (230 °C) | 4 | 1,28 | | | | 1,25 |

**Tabelle 13:**

| **Vergleichsbeispiel** | **Press-druck [t/cm²]** | **Dichte Sinterteil bei 350°C (1°C/min) [g/cm³]** | **Dichte Sinterteil bei 380°C (1°C/min) [g/cm³]** |
|---|---|---|---|
| 5 | 2,8 | 1,28 | |
| 6 | 2,8 | | 1,28 |

Die charakteristischen Druckfestigkeiten, E-Modul, und Dehnung bei Kraftmaximum werden in Tabelle 14 und 15 zusammengefasst

**Tabelle 14:**

| **Polymer aus Bsp.** | **Press-druck [t/cm²]** | **Druck-festigkeit Sinter-teil bei 425°C [MPa]** | **E-Modul Sinterteil bei 425°C [MPa]** | **Dehnung Sinterteil bei Kraft-maximum . bei 425°C [%]** | **Druckfestigkeit Sinter-teil bei 410°C [MPa]** | **Druck-festigkeit Sinter-teil bei 395°C [MPa]** | **Druck-festigkeit Sinterteil bei 410°C 2°C/min [MPa]** |
|---|---|---|---|---|---|---|---|
| 2 | 2 | 239 | 1646 | 24,8 | | | |
| | 3 | 262 | 1612 | 24,0 | 274 | 250 | 262 |
| | 4 | 287 | 1728 | 34,4 | 279 | 275 | 277 |
| | 5 | 291 | 1720 | 35,5 | 293 | 273 | 288 |
| | 6 | 304 | 1717 | 37,4 | | | |
| 3 | 3 | 303 | 1805 | 36,5 | 292 | 289 | |
| | 4 | 306 | 1815 | 37,6 | 310 | 292 | |
| | 5 | 306 | 1848 | 36,7 | 304 | 303 | |
| 4 | 2,8 | 164 | 1109 | 20,1 | | | |
| 10 | 4 | | | | | 291 | |
| 13 (180 °C) | 4 | | | | | | 210 |
| 13 (230 °C) | 4 | | | | | | 140 |

**Tabelle 15:**

| **Polymer aus Vergleichs-beispiel** | **Press-druck [t/cm²]** | **Druck-festigkeit Sinter-teil bei 350°C [MPa]** | **E-Modul Sinterteil bei 350°C [MPa]** | **Dehnung Sinterteil bei Kraft-maximum bei 350°C [%]** | **Druck-festigkeit Sinter-teil bei 380°C [MPa]** | **E-Modul Sinterteil bei 380°C [MPa]** | **Dehnung Sinterteil bei Kraft maximum bei 380°C [%]** |
|---|---|---|---|---|---|---|---|
| 5 | 2,8 | 392 | 1648 | 59 | | | |
| 6 | 2,8 | | | | 370 | 1578 | 57 |

Die Ergebnisse der Formteile aus den Polyimidpulvern gemäß Beispiel 13 zeigen, dass bei höherer Trocknungstemperatur die Druckfestigkeit abnimmt.

### Beispiel 15: Herstellung von Direct Forming Biegebruch-Prüfkörper mit Pulvern aus Beispiel 2 und 3 und Vergleichsbeispiel 5 und 6

Aus dem erfindungsgemäßen Polyimidpulver aus Beispiel 2 und 3 werden Biegebruch-Prüfkörper in den Maßen gemäß ISO 178 über das DF-Verfahren hergestellt. Dabei werden unterschiedliche Drücke angewendet. Die Grünteile werden im Anschluss mit einer definierten Rampe unter Luftatmosphäre auf die gewählte Temperatur erhitzt und bei dieser Temperatur für eine definierte Zeit gesintert. Die Sinterlinge werden danach auf ihre Biegebruchfestigkeit untersucht. Tabelle 16 und 17 fassen die gewählten Press- und Sinterbedingungen zusammen.

**Tabelle 16:**

| **Polymer aus Bsp.** | **Press-druck [t/cm²]** | **Biegebruch-festigkeit Sinterteil bei 410°C 1°C/min [MPa]** | **E-Modul Sinterteil bei 410°C 1°C/min [MPa]** | **Dehnung Sinterteil bei Kraftmax. bei 410°C 1°C/min [%]** | **Biegebruch-festigkeit Sinterteil bei 425°C 0,5°C/min [MPa]** | **Biegebruch-festigkeit Sinterteil bei 440°C 2°C/min [MPa]** |
|---|---|---|---|---|---|---|
| 2 | 2,5 | 51,3 | 2662 | 2,01 | | |
| | 3 | 57,3 | 2752 | 2,17 | | |
| | 3,5 | 62,4 | 2897 | 2,26 | | |
| | 4 | 64,6 | 2972 | 2,25 | | 67,8 |
| | 4,5 | 70,1 | 3038 | 2,41 | | 72,3 |
| 3 | 3 | 135,7 | 3259 | 4,75 | 130,3 | 101,6 (0,2°C/Min) |
| | 4 | 138,9 | 3209 | 4,89 | 126,4 | 104,5 (0,2°C/Min) |
| | 5 | 139,7 | 3364 | 4,77 | 137,4 | 110,8 (0,2°C/Min) |

**Tabelle 17:**

| **Polymer aus Vergleichs-beispiel** | **Press-druck [t/cm²]** | **Biege-bruch-festig-keit Sinter-teil bei 350°C 1°C/min [MPa]** | **E-Modul Sinter-teil bei 350°C 1°C/min [MPa]** | **Dehnung Sinter-teil bei Kraft-maximum bei 350°C 1°C/min [%]** | **Biege-bruch-festig-keit Sinter-teil bei 380°C 1°C/min [MPa]** | **E-Modul Sinter-teil bei 380°C 1°C/min [MPa]** | **Dehnung Sinter-teil bei Kraft-maximum bei 380°C 1°C/min [%]** |
|---|---|---|---|---|---|---|---|
| 5 | 2,8 | 110 | 2879 | 4,3 | | | |
| 6 | 2,8 | | | | 117 | 2825 | 5,0 |

### Beispiele 16 - 18: Herstellung von Compounds

Durch die Beimischung von Zusatzstoffen können Compounds mit neuen Eigenschaften erzeugt werden. Die in Beispiel 2 und 3 hergestellten Pulver werden dazu mit einem definierten Gehalt Graphit gut durchmischt. Die Zusammensetzungen der Pulver werden in Tabelle 18 zusammengefasst.

**Tabelle 18:**

| **Beispiel** | **Polymer aus Bsp** | **Graphit [%]** | **Polymer [%]** |
|---|---|---|---|
| 16 | 2 | 15 | 85 |
| 17 | 2 | 40 | 60 |
| 18 | 3 | 40 | 60 |

### Vergleichsbeispiel 7: Herstellung von Compounds aus P84® NT2

Das Polymer aus dem Vergleichsbeispiel 6 werden in analoger Art und Weise zu Beispiel 16-18 mit Graphit zu den entsprechenden Compounds gemischt. Die Zusammensetzung des Compounds wird in Tabelle 19 zusammengefasst.

**Tabelle 19:**

| **Vergleichsbeispiel** | **Polymer aus Vergleichsbeispiel** | **Graphit [%]** | **Polymer [%]** |
|---|---|---|---|
| 7 | 6 | 40 | 60 |

### Beispiel 19: Herstellung von Direct Forming Druck-Prüfkörper mit Compounds aus Beispiel 12,16-18 und Vergleichsbeispiel 7

Die in Beispiel 16-18 und in Vergleichsbeispiel 7 hergestellten Compounds mit Graphit können über das Direct Forming Verfahren zu Formteilen mit neuen Eigenschaften verarbeiten werden. Die Grünteile wurden analog zu der in Beispiel 14 beschriebenen Arbeitsvorschrift hergestellt und analog zu dem in Beispiel 14 beschriebenen Prozedere gesintert. Die Press- und Sinterbedingungen werden in Tabelle 20 und 21 zusammengefasst.

**Tabelle 20:**

| **Compound aus Beispiel** | **Pressdruck [t/cm²]** | **Dichte Grünteil [g/cm³]** | **Dichte Sinterteil [g/cm³]** | **Temperatur Sintern [°C]** | **Aufheizrampe [°C/min]** |
|---|---|---|---|---|---|
| 12 | 4 | | 1,54 | 410 | 2 |
| 16 | 3 | 1,40 | 1,41 | 410 | 2 |
| | 4 | 1,41 | 1,41 | 410 | 2 |
| | 5 | 1,42 | 1,42 | 410 | 2 |
| 17 | 3 | 1,55 | 1,57 | 410 | 2 |
| | 4 | 1,56 | 1,58 | 410 | 2 |
| | 5 | 1,57 | 1,58 | 410 | 2 |
| 18 | 4 | 1,56 | 1,58 | 410 | 1 |
| | | 1,56 | 1,58 | 425 | 1 |
| | | 1,56 | 1,58 | 440 | 1 |
| | 5 | 1,57 | 1,59 | 410 | 1 |
| | | 1,57 | 1,59 | 425 | 1 |
| | | 1,57 | 1,58 | 440 | 1 |
| | 6 | 1,58 | 1,59 | 410 | 1 |
| | | 1,58 | 1,59 | 425 | 1 |
| | | 1,57 | 1,59 | 440 | 1 |

**Tabelle 21:**

| **Compound aus Vergleichsbeispiel** | **Pressdruck [t/cm²]** | **Dichte Sinterteil [g/cm³]** | **Temperatur Sintern [°C]** | **Aufheiz-rampe [°C/min]** |
|---|---|---|---|---|
| 7 | 2,8 | 1,48 | 380 | 1 |

Die Sinterteile werden anschließend auf ihre Druckfestigkeit, E-Modul und Dehnung bei Kraftmaximum untersucht. Die charakteristischen Werte dafür werden in Tabelle 22 und 23 zusammengefasst:

**Tabelle 22:**

| **Compound aus Beispiel** | **Press-druck [t/cm²]** | **Temperatur Sintern [°C]** | **Druckfestig-keit Sinterteil [MPa]** | **E-Modul Sinterteil [MPa]** | **Dehnung bei Kraftmaximum [%]** |
|---|---|---|---|---|---|
| 12 | 4 | 410 | 133,6 | 1171 | 10,3 |
| 16 | 3 | 410 | 183,4 | 1625 | 20,0 |
| | 4 | 410 | 179,9 | 1616 | 19,5 |
| | 5 | 410 | 186,2 | 1633 | 20,3 |
| 17 | 3 | 410 | 100,7 | 1552 | 8,1 |
| | 4 | 410 | 103,8 | 1510 | 8,9 |
| | 5 | 410 | 107,9 | 1487 | 9,6 |
| 18 | 4 | 410 | 111,0 | 1512 | 10,2 |
| | | 425 | 112,9 | 1548 | 9,8 |
| | | 440 | 116,0 | 1531 | 10,7 |
| | 5 | 410 | 113,7 | 1528 | 10,5 |
| | | 425 | 117,4 | 1569 | 10,5 |
| | | 440 | 118,7 | 1593 | 10,7 |
| | 6 | 410 | 117,0 | 1615 | 10,3 |
| | | 425 | 120,9 | 1679 | 10,8 |
| | | 440 | 120,5 | 1669 | 10,5 |

**Tabelle 23:**

| **Compound aus Vergleichsbeispiel** | **Druckfestigkeit Sinterteil [MPa]** | **E-Modul Sinterteil [MPa]** | **Dehnung bei Kraftmaximum [%]** |
|---|---|---|---|
| 7 | 128 | 1389 | 21 |

### Beispiel 20: Herstellung eines HCM Presslings aus Beispiel 2

Es werden 400 g des erfindungsgemäßen Pulvers aus Beispiel 2 unter Vakuum auf 150°C erhitzt, 1h bei dieser Temperatur gehalten und anschließend mit einer Rampe von 0,2°C/min auf 315°C erhitzt. Diese Temperatur wird nun 24 h gehalten und anschließend unter Vakuum auf Raumtemperatur abgekühlt. Dieses konditionierte Pulver wird danach in die Matrize der Presse eingebracht (Höfer Heißpresse, Durchmesser Matrize 170 mm). Die geschlossene Pressform wird nun 1 h bei 250°C geheizt und im Anschluss mit 1,25°C/min auf 400°C erhitzt. Diese Temperatur wird danach für 3 h gehalten. Der Pressdruck liegt dabei bei 0,4t/cm² Nach dem Abkühlen der Presse kann der finale HCM Teil entnommen werden.
Aus diesem HCM Teil werden anschließend Biege-Bruchkörper gemäß der Norm EN ISO 178 herausgearbeitet. Diese werden anschließend auf ihre Biegebruchfestigkeit und ihren E-Modul hin untersucht.
Tabelle 24 fasst die mechanischen Eigenschaften des HCM Teils aus dem erfindungsgemäßen Pulver zusammen.

**Tabelle 24:**

| **Polymer aus Bsp.** | **Dichte HCM Teil [g/cm³]** | **Biegebruchfestigkeit [MPa]** | **E-Modul Sinterteil [MPa]** | **Dehnung Kraftmaximum 1°C/min [%]** |
|---|---|---|---|---|
| 2 | 1,40 | 177,1 | 3851 | 6,81 |

## Patentansprüche

1. Formkörper hergestellt aus einem Rohpulver,
welches ein Polyimidpulver umfasst, dessen Polyimidpolymer aus mindestens einer aromatischen Tetracarbonsäuredianhydrid Komponente (A) und mindestens einer Diaminkomponente (B) zusammengesetzt ist,
**dadurch gekennzeichnet,**
**dass** mindestens eine aromatische Tetracarbonsäuredianhydrid Komponente (A) zu 60 bis 100 mol% aus 3,3',4,4'-Biphenyltetracarbon-säuredianhydrid (BPDA) und zu 40 bis 0 mol% aus Pyromellitsäuredianhydrid (PMDA) besteht
und
mindestens eine Diaminkomponente (B) eine Mischung aus
p-Phenylendiamin (p-PDA), m-Phenylendiamin (m-PDA) und 4,4'-Diaminodiphenylether (ODA) ist.

2. Formkörper nach Anspruch 1,
**dadurch gekennzeichnet,**
**dass** es sich bei dem Rohpulver zur Herstellung des Formkörpers um ein Compound handelt, dass neben dem Polyimidpulver 0,5 bis 80 Gew. %, bevorzugt 1 bis 70 Gew. %, besonders bevorzugt 5 bis 60 Gew. %, und ganz besonders bevorzugt 10 bis 50 Gew. % an Zuschlagsstoffen umfasst
und/oder
**dass** es sich bei dem Rohpulver zur Herstellung des Formkörpers um ein Compound handelt, dass Zuschlagsstoff(e) umfasst, welche von dem Polyimidpolymer gemäß Anspruch 1 umhüllt sind, wobei die Umhüllung bevorzugt eine Schichtdicke von 0,1 µm und 50 µm aufweist.

3. Verfahren zur Herstellung von Formkörpern,
**dadurch gekennzeichnet,**
**dass** man im Direct Forming Verfahren formt, wobei ein, wie in einem der Ansprüche 1 oder 2 definiertes, Rohpulver bei hohen Drücken von 0,1 bis 10 to/cm², bevorzugt 2 bis 7 to/cm² bei einer Temperatur zwischen 0°C und 100°C, bevorzugt zwischen 15 und 40 °C verpresst wird und die erhaltenen Grünteile dann, bevorzugt in einer Luft- oder Schutzgasathmosphäre, bei Temperaturen von 250 bis 600°C, bevorzugt 300 bis 500 °C, besonders bevorzugt bei 350 bis 480 °C und ganz besonders bevorzugt bei 350 bis 450 °C für 0,1 bis 10 h, bevorzugt für 1 bis 3 Stunden gesintert werden
oder
**dass** man im Hot Compression Molding Verfahren formt, wobei ein, wie in einem der Ansprüche 1 oder 2 definiertes, Rohpulver bei Drücken von 100 bis 1000 bar, bevorzugt 300 bis 500 bar und einer Temperatur oberhalb des Glaspunktes des Polymers, bevorzugt bei 300 bis 500 °C, bis zur vollständigen Versinterung verpresst wird.

4. Polyimidpulver,
**dadurch gekennzeichnet,**
**dass**
das es ein Polyimidpolymer, das aus mindestens einer aromatischen Tetracarbonsäuredianhydrid Komponente (A) und mindestens einer Diaminkomponente (B) zusammengesetzt ist, umfasst
wobei
mindestens eine aromatische Tetracarbonsäuredianhydrid Komponente (A) zu 60 bis 100 mol% aus 3,3',4,4'-Biphenyltetracarbon-säuredianhydrid (BPDA) und zu 40 bis 0 mol% aus Pyromellitsäuredianhydrid (PMDA), besteht
und
mindestens eine Diaminkomponente (B) eine Mischung aus p-Phenylendiamin (p-PDA), m-Phenylendiamin (m-PDA) und 4,4'-Diaminodiphenylether (ODA) ist.

5. Polyimidpulver nach Anspruch 4 bzw. als Bestandteil des Rohpulvers in einem der Ansprüche 1 bis 3,
**dadurch gekennzeichnet,**
**dass** Polyimidpulver eine spezifische Oberfläche nach BET im Bereich von 10 bis 200 m²/g, bevorzugt im Bereich von 20 bis 150 m²/g, besonders bevorzugt von 40 bis 120 m²/g und ganz besonders bevorzugt von 60 bis 100 m²/g aufweist.

6. Polyimidpulver nach einem der Ansprüche 4 oder 5 bzw. als Bestandteil des Rohpulvers in einem der Ansprüche 1 bis 3,
**dadurch gekennzeichnet,**
**dass** die aromatische Tetracarbonsäuredianhydrid-komponente (A) zu 65 bis 100 mol% aus BPDA und zu 35 bis 0 mol% aus PMDA, bevorzugt zu 70 bis 100 mol% BPDA und 30 bis 0 mol% aus PMDA, besonders bevorzugt zu größer gleich 95 mol% BPDA und 5 bis 0 mol % PMDA und ganz besonders bevorzugt zu 100 mol% aus BPDA besteht.

7. Polyimidpulver nach einem der Ansprüche 4 bis 6 bzw. als Bestandteil des Rohpulvers in einem der Ansprüche 1 bis 3,
**dadurch gekennzeichnet,**
**dass** die Diaminkomponente (B) zu 60 bis 99 mol % aus PDA und zu 40 bis 1 mol% aus ODA, bevorzugt zu 65 bis 95 mol% aus PDA und zu 35 bis 5 mol% aus ODA und besonders bevorzugt zu 65 bis 80 mol% PDA und 35 bis 20 mol% aus ODA besteht, wobei PDA für ein Gemisch aus p-PDA und m-PDA steht, und wobei das Verhältnis p-PDA zu m-PDA bevorzugt im Bereich von 5: 95 bis 95 : 5, besonders bevorzugt im Bereich von 20:80 bis 95:5, ganz besonders bevorzugt im Bereich von 50:50 bis 95:5, speziell bevorzugt im Bereich von 60:40 bis 85:15 und ganz speziell bevorzugt im Bereich von 60:40 bis 70:30 liegt.

8. Polyimidpulver nach einem der Ansprüche 4 bis 7 bzw. als Bestandteil des Rohpulvers in einem der Ansprüche 1 bis 3,
**dadurch gekennzeichnet,**
**dass** es eine inhärente Viskosität in konzentrierter Schwefelsäure vor der Herstellung der Formteile und dem Sintern von 10 bis 100 ml/g, bevorzugt von 15 bis 80 ml/g und besonders bevorzugt 20 bis 50 ml/g aufweist
und/oder
**dass** es eine Korngröße d90 von 1 bis 300 µm, bevorzugt von 5 bis 150 µm, besonders bevorzugt von 10 bis 100 µm und speziell bevorzugt von 15 bis 80 µm aufweist.

9. Verfahren zur Herstellung eines Polyimidpulvers,
**dadurch gekennzeichnet,**
**dass** es die nachfolgenden Schritte umfasst:
i) Herstellung einer Polyamidsäure aus mindestens einer, wie in einem der Ansprüche 4 oder 6 definierten, aromatischen Tetracarbonsäuredianhydridkomponente (A) und mindestens einer, in einem der Ansprüche 4 oder 7 definierten, Diaminkomponente (B) in einem aprotisch dipolaren Lösungsmittel
ii) Imidisierung der Polyamidsäure
iii) Fällung des entstandenen Polyimids
iv) Waschen des Polyimidpulvers
v) Trocknen des Polyimidpulvers
wobei die Schritte ii) und iii) separat oder zusammen in einem Schritt und die Schritte iv) und v) in unterschiedlicher Reihenfolgen ausgeführt werden können.

10. Verfahren nach Anspruch 9,
**dadurch gekennzeichnet,**
**dass** man eine Polyamidsäure aus Schritt i) in Schritt ii), bevorzugt kontinuierlich, in Gegenwart eines Katalysators und optional eines Fällhilfsmittels in ein siedendes aprotisch dipolares Lösungsmittel leitet und das entstehende Reaktionswasser kontinuierlich, bevorzugt durch Destillation, aus dem System entfernt, wobei das entstehende Polyimid ausfällt, so dass die Verfahrensschritte ii) und iii) miteinander verschmolzen werden.

11. Verfahren nach einem der Ansprüche 9 oder 10,
**dadurch gekennzeichnet,**
**dass** in Schritt i) und/oder ii) als aprotisch dipolares Lösungsmittel ein Lösungsmittel ausgewählt aus der Gruppe bestehend Dimethylsulfoxid, Dimethylformamid, Dimethylacetamid, N-Methyl-pyrrolidinon, N-Ethylpyrrolidinon, Sulfolan, Pyridin oder Mischungen davon verwendet wird
und/oder
**dass** die Reaktion in Schritt i) bei einer Temperatur zwischen -10°C bis 80°C, bevorzugt zwischen 0 und 30 °C durchgeführt wird.
und/oder
**dass** eine Säure oder ein Amin als Katalysator in Verfahrensschritt ii) verwendet wird, bevorzugt eine Mineralsäuren, besonders bevorzugt Phosphorsäure oder Benzolphosphonsäure, und/oder dass eine im Lösungsmittel unlösliche , bevorzugt anorganische, Substanz als Fällhilfsmittel in Schritt ii) oder iii) verwendet wird, besonders bevorzugt werden pyrogene Kieselsäuren, pyrogene Metalloxide, Graphit oder Alkalisalze verwendet.

12. Verfahren nach einem der Ansprüche 9 bis 11,
**dadurch gekennzeichnet,**
**dass** man aus einer nach Schritt iii) erhaltene Suspension das Lösungsmittel durch Auswaschen und/oder durch Verdampfen und den Katalysator durch Auswaschen in Schritt iv) und/oder v) entfernt, bevorzugt bis zu einem Restlösungsmittelgehalt von kleiner gleich 1 Gew. %, bevorzugt 0,001 bis 0,5 Gew. %, besonders bevorzugt < 0,1 Gew% und ganz besonders bevorzugt < 0,01%.

13. Verfahren nach einem der Ansprüche 9 bis 13,
**dadurch gekennzeichnet,**
**dass** das Polyimidpulver in Schritt v), bevorzugt mittels Sprühtrocknung, bei Temperaturen von 50 bis 200°C, bevorzugt 50 bis 150°C, besonders bevorzugt 60 bis 140°C, ganz besonders bevorzugt bei 70 bis 130°C und speziell bevorzugt 80 bis 120°C getrocknet wird.

14. Verfahren zur Herstellung von Compounds aus einem Polyimidpulver und Zuschlagsstoffen, **dadurch gekennzeichnet,**
**dass** man die Polyamidsäure aus Verfahrensschritt i) von Anspruch 9 oder das Polyimidpulver aus einem der Schritte ii) bis v) von Anspruch 9, trocken oder in Suspension, mit Zuschlagsstoffen mischt, wobei die Mengen an Zuschlagsstoffen, bevorzugt einem Füllstoff oder einer Füllstoffmischung, bezogen auf die Menge des Polyimids bzw. der Polyamidsäure, zwischen 0,1 Gew. % und 90 Gew. % liegt.

15. Verwendung der Formkörper nach einem der Ansprüche 1 oder 2, ggf. nach gängigen mechanischen und thermischen Bearbeitungs- und Umformungsverfahren, als Greifer in der Glasindustrie oder als Lager und Rollbuchsen, Dichtungen und Dichtringe, Führungen, Ventilsitzen, Absperrventile, Bremsbeläge, Ventile in Turboladern oder Kompressoren, Lagerkomponenten wie Käfige oder Kugeln, Zündkerzenstecker, Testsockets und Waferhalter in der Elektronikindustrie, Elektrische und thermische Isolationsteile, Kolbenringe für Kompressoren, Druckringe für Getriebe, strahlungs- und chemikalienbeständige Rohrdichtungen, Bremsbeläge, Reibbeläge, kunstharzgebundene Diamantwerkzeuge oder Ferrule in der Gaschromatographie.

## Claims

1. Shaped body produced from a raw powder comprising a polyimide powder, wherein the polyimide polymer is composed of at least one aromatic tetracarboxylic dianhydride component (A) and at least one diamine component (B),
**characterized in that**
at least one aromatic tetracarboxylic dianhydride component (A) consists to an extent of 60 to 100 mol% of 3,3',4,4'-biphenyltetracarboxylic dianhydride (BPDA) and to an extent of 40 to 0 mol% of pyromellitic dianhydride (PMDA)
and
at least one diamine component (B) is a mixture of
p-phenylenediamine (p-PDA), m-phenylenediamine (m-PDA) and 4,4'-diaminodiphenyl ether (ODA).

2. Shaped body according to Claim 1,
**characterized in that**
the raw powder for production of the shaped body is a compound comprising, in addition to the polyimide powder, 0.5% to 80% by weight, preferably 1% to 70% by weight, more preferably 5% to 60% by weight and most preferably 10% to 50% by weight of additives
and/or
**in that** the raw powder for production of the shaped body is a compound comprising additive(s) coated by the polyimide polymer according to Claim 1, the coating preferably having a layer thickness of 0.1 µm to 50 µm.

3. Process for producing shaped bodies, **characterized in that**
they are shaped by the direct forming process, where a raw powder as defined in either of Claims 1 and 2 is compressed at high pressures of 0.1 to 10 to/cm², preferably 2 to 7 to/cm², at a temperature between 0°C and 100°C, preferably between 15 and 40°C, and the green parts obtained are then sintered, preferably in an air or protective gas atmosphere, at temperatures of 250 to 600°C, preferably 300 to 500°C, more preferably at 350 to 480°C and most preferably at 350 to 450°C, for 0.1 to 10 h, preferably for 1 to 3 hours,
or
**in that** they are shaped by the hot compression moulding process, where a raw powder as defined in either of Claims 1 and 2 is compressed at pressures of 100 to 1000 bar, preferably 300 to 500 bar, and a temperature above the glass transition point of the polymer, preferably at 300 to 500°C, until sintering is complete.

4. Polyimide powder,
**characterized in that**
it comprises a polyimide powder composed of at least one aromatic tetracarboxylic dianhydride component (A) and at least one diamine component (B),
where
at least one aromatic tetracarboxylic dianhydride component (A) consists to an extent of 60 to 100 mol% of 3,3',4,4'-biphenyltetracarboxylic dianhydride (BPDA) and to an extent of 40 to 0 mol% of pyromellitic dianhydride (PMDA)
and
at least one diamine component (B) is a mixture of p-phenylenediamine (p-PDA), m-phenylenediamine (m-PDA) and 4,4'-diaminodiphenyl ether (ODA).

5. Polyimide powder according to Claim 4, or as a constituent of the raw powder in any one of Claims 1 to 3,
**characterized in that**
polyimide powder has a specific BET surface area in the range from 10 to 200 m²/g, preferably in the range from 20 to 150 m²/g, more preferably from 40 to 120 m²/g and most preferably from 60 to 100 m²/g.

6. Polyimide powder according to either of Claims 4 and 5, or as a constituent of the raw powder in any one of Claims 1 to 3,
**characterized in that**
the aromatic tetracarboxylic dianhydride component (A) consists to an extent of 65 to 100 mol% of BPDA and to an extent of 35 to 0 mol% of PMDA, preferably to an extent of 70 to 100 mol% of BPDA and 30 to 0 mol% of PMDA, more preferably to an extent of greater than or equal to 95 mol% of BPDA and 5 to 0 mol% of PMDA and most preferably to an extent of 100 mol% of BPDA.

7. Polyimide powder according to any one of Claims 4 to 6, or as a constituent of the raw powder in any one of Claims 1 to 3,
**characterized in that**
the diamine component (B) consists to an extent of 60 to 99 mol% of PDA and to an extent of 40 to 1 mol% of ODA, preferably to an extent of 65 to 95 mol% of PDA and to an extent of 35 to 5 mol% of ODA and more preferably to an extent of 65 to 80 mol% of PDA and 35 to 20 mol% of ODA, where PDA is a mixture of p-PDA and m-PDA, and where the ratio of p-PDA to m-PDA is preferably in the range from 5:95 to 95:5, more preferably in the range from 20:80 to 95:5, even more preferably in the range from 50:50 to 95:5, especially preferably in the range from 60:40 to 85:15 and very especially preferably in the range from 60:40 to 70:30.

8. Polyimide powder according to any one of Claims 4 to 7, or as a constituent of the raw powder in any one of Claims 1 to 3,
**characterized in that**
it has an inherent viscosity in concentrated sulphuric acid, prior to the production of the mouldings and the sintering, of 10 to 100 ml/g, preferably 15 to 80 ml/g and more preferably 20 to 50 ml/g
and/or
**in that** it has a particle size d90 of 1 to 300 µm, preferably of 5 to 150 µm, more preferably of 10 to 100 µm and especially preferably of 15 to 80 µm.

9. Process for producing a polyimide powder, **characterized in that**
it comprises the following steps:
i) preparing a polyamide acid from at least one aromatic tetracarboxylic dianhydride component (A), defined in either of Claims 4 and 6, and at least one diamine component (B), defined in either of Claims 4 and 7, in an aprotic dipolar solvent,
ii) imidizing the polyamide acid,
iii) precipitating the polyimide formed,
iv) washing the polyimide powder,
v) drying the polyimide powder,
where steps ii) and iii) can be executed separately or together in one step, and steps iv) and v) can be executed in different sequences.

10. Process according to Claim 9,
**characterized in that**
in step ii) a polyamide acid from step i) is passed, preferably continuously, in the presence of a catalyst and optionally a precipitation auxilliary, into a boiling aprotic dipolar solvent and the water of reaction formed is removed continuously from the system, preferably by distillation, precipitating the polyimide formed, such that process steps ii) and iii) are combined with one another.

11. Process according to either of Claims 9 and 10, **characterized in that**
the aprotic dipolar solvent used in step i) and/or ii) is a solvent selected from the group consisting of dimethyl sulphoxide, dimethylformamide, dimethylacetamide, N-methylpyrrolidinone, N-ethylpyrrolidinone, sulpholane, pyridine and mixtures thereof, and/or
**in that** the reaction in step i) is conducted at a temperature between -10°C and 80°C, preferably between 0 and 30°C,
and/or
the catalyst used in process step ii) is an acid or an amine, preferably a mineral acid, more preferably phosphoric acid or benzenephosphonic acid, and/or the precipitation auxiliary used in step ii) or iii) is a preferably inorganic substance which is insoluble in the solvent, more preferably fumed silicas, pyrogenic metal oxides, graphite or alkali metal salts.

12. Process according to any one of Claims 9 to 11, **characterized in that**
the solvent is removed from a suspension obtained after step iii) by washing and/or by evaporation, and the catalyst is removed in step iv) and/or v) by washing, preferably down to a residual solvent content of less than or equal to 1% by weight, preferably 0.001% to 0.5% by weight, more preferably < 0.1% by weight and most preferably < 0.01%.

13. Process according to any one of Claims 9 to 13, **characterized in that**
the polyimide powder is dried in step v), preferably by spray drying, at temperatures of 50 to 200°C, preferably 50 to 150°C, more preferably 60 to 140°C, even more preferably at 70 to 130°C and especially preferably 80 to 120°C.

14. Process for producing compounds composed of a polyimide powder and additives,
**characterized in that**
the polyamide acid from process step i) of Claim 9 or the polyimide powder from one of steps ii) to v) of Claim 9, in dry form or in suspension, is mixed with additives, the amounts of additives, preferably a filler or a filler mixture, based on the amount of polyimide or the polyamide acid, being between 0.1% by weight and 90% by weight.

15. Use of the shaped bodies according to either of Claims 1 and 2, optionally after standard mechanical and thermal processing and reshaping, as tongs in the glass industry or as bearings and roller bushings, gaskets and gasket rings, guides, valve seats, shut-off valves, brake linings, valves in turbochargers or compressors, bearing components such as cages or balls, spark plug connectors, test sockets and wafer holders in the electronics industry, electrical and thermal insulation components, piston rings for compressors, pressure rings for gearboxes, radiation- and chemical-resistant pipe seals, brake linings, friction linings, synthetic resinbound diamond tools or ferrules in gas chromatography.

## Revendications

1. Corps moulé fabriqué à partir d'une poudre brute, qui comprend une poudre de polyimide, dont le polymère de polyimide est composé par au moins un composant dianhydride d'acide tétracarboxylique aromatique (A) et au moins un composant diamine (B),
**caractérisé en ce qu'**au moins un composant dianhydride d'acide tétracarboxylique aromatique (A) est constitué par 60 à 100 % en moles de dianhydride de l'acide 3,3',4,4'-biphényltétracarboxylique (BPDA) et 40 à 0 % en moles de dianhydride de l'acide pyroméllitique (PMDA),
et
au moins un composant diamine (B) est un mélange de p-phénylène-diamine (p-PDA), de m-phénylène-diamine (m-PDA) et d'éther de 4,4'-diaminodiphényle (ODA).

2. Corps moulé selon la revendication 1, **caractérisé en ce que** la poudre brute pour la fabrication du corps moulé est un composé qui comprend en plus de la poudre de polyimide 0,5 à 80 % en poids, de préférence 1 à 70 % en poids, de manière particulièrement préférée 5 à 60 % en poids et de manière tout particulièrement préférée 10 à 50 % en poids d'additifs,
et/ou
**en ce que** la poudre brute pour la fabrication du corps moulé est un composé qui comprend un ou plusieurs additifs, qui sont enrobés par le polymère de polyimide selon la revendication 1, l'enrobage présentant de préférence une épaisseur de couche de 0,1 µm à 50 µm.

3. Procédé de fabrication de corps moulés, **caractérisé en ce que** le moulage a lieu par le procédé de moulage direct, une poudre brute telle que définie dans l'une quelconque des revendications 1 ou 2 étant comprimée à des pressions élevées de 0,1 à 10 t/cm², de préférence de 2 à 7 t/cm², à une température comprise entre 0 °C et 100 °C, de préférence comprise entre 15 et 40 °C, et les pièces vertes obtenues étant ensuite frittées, de préférence dans une atmosphère d'air ou de gaz protecteur, à des températures de 250 à 600 °C, de préférence de 300 à 500 °C, de manière particulièrement préférée de 350 à 480 °C, et de manière tout particulièrement préférée de 350 à 450 °C, pendant 0,1 à 10 h, de préférence pendant 1 à 3 heures,
ou
**en ce que** le moulage a lieu par le procédé de moulage par compression à chaud, une poudre brute telle que définie dans l'une quelconque des revendications 1 ou 2 étant comprimée jusqu'au frittage total à des pressions de 100 à 1 000 bar, de préférence de 300 à 500 bar, et à une température supérieure à la température de transition vitreuse du polymère, de préférence de 300 à 500 °C.

4. Poudre de polyimide, **caractérisée en ce qu'**elle comprend un polymère de polyimide, qui est composé par au moins un composant dianhydride d'acide tétracarboxylique aromatique (A) et au moins un composant diamine (B),
au moins un composant dianhydride d'acide tétracarboxylique aromatique (A) étant constitué par 60 à 100 % en moles de dianhydride de l'acide 3,3',4,4'-biphényltétracarboxylique (BPDA) et 40 à 0 % en moles de dianhydride de l'acide pyroméllitique (PMDA),
et
au moins un composant diamine (B) étant un mélange de p-phénylène-diamine (p-PDA), de m-phénylène-diamine (m-PDA) et d'éther de 4,4'-diaminodiphényle (ODA).

5. Poudre de polyimide selon la revendication 4 ou en tant que constituant de la poudre brute selon l'une quelconque des revendications 1 à 3, **caractérisée en ce que** la poudre de polyimide présente une surface spécifique selon BET dans la plage allant de 10 à 200 m²/g, de préférence dans la plage allant de 20 à 150 m²/g, de manière particulièrement préférée de 40 à 120 m²/g et de manière tout particulièrement préférée de 60 à 100 m²/g.

6. Poudre de polyimide selon l'une quelconque des revendications 4 ou 5 ou en tant que constituant de la poudre brute selon l'une quelconque des revendications 1 à 3, **caractérisée en ce que** le composant dianhydride d'acide tétracarboxylique aromatique (A) est constitué par 65 à 100 % en moles de BPDA et 35 à 0 % en moles de PMDA, de préférence de 70 à 100 % en moles de BPDA et 30 à 0 % en moles de PMDA, de manière particulièrement préférée de 95 % en moles ou plus de BPDA et 5 à 0 % en moles de PMDA, et de manière tout particulièrement préférée de 100 % en moles de BPDA.

7. Poudre de polyimide selon l'une quelconque des revendications 4 à 6 ou en tant que constituant de la poudre brute selon l'une quelconque des revendications 1 à 3, **caractérisée en ce que** le composant diamine (B) est constitué par 60 à 99 % en moles de PDA et 40 à 1 % en moles d'ODA, de préférence 65 à 95 % en moles de PDA et 35 à 5 % en moles d'ODA, et de manière particulièrement préférée 65 à 80 % en moles de PDA et 35 à 20 % en moles d'ODA, PDA désignant un mélange de p-PDA et de m-PDA, et le rapport entre la p-PDA et la m-PDA se situant de préférence dans la plage allant de 5:95 à 95:5, de manière particulièrement préférée dans la plage allant de 20:80 à 95:5, de manière tout particulièrement préférée dans la plage allant de 50:50 à 95:5, de manière spécialement préférée dans la plage allant de 60:40 à 85:15 et de manière tout spécialement préférée dans la plage allant de 60:40 à 70:30.

8. Poudre de polyimide selon l'une quelconque des revendications 4 à 7 ou en tant que constituant de la poudre brute selon l'une quelconque des revendications 1 à 3, **caractérisée en ce qu'**elle présente une viscosité inhérente dans de l'acide sulfurique concentré avant la fabrication des pièces moulées et le frittage de 10 à 100 ml/g, de préférence de 15 à 80 ml/g et de manière particulièrement préférée de 20 à 50 ml/g,
et/ou
**en ce qu'**elle présente une taille de particule d90 de 1 à 300 µm, de préférence de 5 à 150 µm, de manière particulièrement préférée de 10 à 100 µm et de manière spécialement préférée de 15 à 80 µm.

9. Procédé de fabrication d'une poudre de polyimide, **caractérisé en ce qu'**il comprend les étapes suivantes :
i) la fabrication d'un acide polyamidique à partir d'au moins un composant dianhydride d'acide tétracarboxylique aromatique (A), tel que défini dans l'une quelconque des revendications 4 ou 6, et d'au moins un composant diamine (B), tel que défini dans l'une quelconque des revendications 4 ou 7, dans un solvant aprotique dipolaire,
ii) l'imidation de l'acide polyamidique,
iii) la précipitation du polyimide formé
iv) le lavage de la poudre de polyimide,
v) le séchage de la poudre de polyimide,
les étapes ii) et iii) pouvant être réalisées séparément ou ensemble en une étape, et les étapes iv) et v) pouvant être réalisées dans un ordre différent.

10. Procédé selon la revendication 9, **caractérisé en ce qu'**un acide polyamidique de l'étape i) est conduit dans l'étape ii), de préférence en continu, en présence d'un catalyseur et éventuellement d'un adjuvant de précipitation, dans un solvant aprotique dipolaire à l'ébullition, et l'eau de réaction formée est éliminée en continu du système, de préférence par distillation, le polyimide formé précipitant, de telle sorte que les étapes de procédé ii) et iii) sont fusionnées l'une avec l'autre.

11. Procédé selon l'une quelconque des revendications 9 ou 10, **caractérisé en ce qu'**à l'étape i) et/ou ii), un solvant choisi dans le groupe constitué par le diméthylsulfoxyde, le diméthylformamide, le diméthylacétamide, la N-méthyl-pyrrolidone, la N-éthylpyrrolidinone, le sulfolane, la pyridine ou leurs mélanges est utilisé en tant que solvant aprotique dipolaire,
et/ou
**en ce que** la réaction à l'étape i) est réalisée à une température comprise entre -10 °C et 80 °C, de préférence entre 0 et 30 °C,
et/ou
**en ce qu'**un acide ou une amine est utilisé en tant que catalyseur à l'étape de procédé ii), de préférence un acide minéral, de manière particulièrement préférée l'acide phosphorique ou l'acide benzène-phosphonique, et/ou
**en ce qu'**une substance insoluble dans le solvant, de préférence inorganique, est utilisée en tant qu'adjuvant de précipitation à l'étape ii) ou iii), de manière particulièrement préférée des silices pyrogénées, des oxydes de métaux pyrogénés, du graphite ou des sels alcalins.

12. Procédé selon l'une quelconque des revendications 9 à 11, **caractérisé en ce qu'**à partir d'une suspension obtenue selon l'étape iii), le solvant est éliminé par lavage et/ou par évaporation, et le catalyseur est éliminé par lavage à l'étape iv) et/ou v), de préférence jusqu'à une teneur en solvant résiduelle inférieure ou égale à 1 % en poids, de préférence de 0,001 à 0,5 % en poids, de manière particulièrement préférée < 0,1 % en poids et de manière tout particulièrement préférée < 0,01 %.

13. Procédé selon l'une quelconque des revendications 9 à 13, **caractérisé en ce que** la poudre de polyimide est séchée à l'étape v), de préférence par séchage par pulvérisation, à des températures de 50 à 200 °C, de préférence de 50 à 150 °C, de manière particulièrement préférée de 60 à 140 °C, de manière tout particulièrement préférée de 70 à 130 °C et de manière spécialement préférée de 80 à 120 °C.

14. Procédé de fabrication de composés d'une poudre de polyimide et d'additifs, **caractérisé en ce que** l'acide polyamidique de l'étape de procédé i) de la revendication 9 ou la poudre de polyimide de l'une quelconque des étapes ii) à v) de la revendication 9 est mélangé, sous forme sèche ou en suspension, avec des additifs, les quantités d'additifs, de préférence d'une charge ou d'un mélange de charges, par rapport à la quantité du polyimide ou de l'acide polyamidique, étant comprises entre 0,1 % en poids et 90 % en poids.

15. Utilisation des corps moulés selon l'une quelconque des revendications 1 ou 2, éventuellement après des procédés de traitement et de façonnage mécaniques et thermiques usuels, en tant que grappins dans l'industrie du verre ou en tant que paliers et connecteurs femelles, joints d'étanchéité et bagues d'étanchéité, conduites, sièges de soupape, robinets d'arrêt, garnitures de frein, soupapes dans turbocompresseurs ou des compresseurs, composants de paliers tels que des cages ou des billes, connecteurs de bougies d'allumage, prises de test et supports de plaquettes dans l'industrie électronique, pièces d'isolation électriques et thermiques, segments de piston pour compresseurs, bagues de pression pour transmissions, joints d'étanchéité tubulaires résistants aux rayonnements et aux produits chimiques, garnitures de frein, garnitures de friction, outils diamantés liés par une résine synthétique ou ferrules dans la chromatographie gazeuse.
